# FASCICULE DE BREVET EUROPEEN

(11) **EP 1 858 939 B1**
(45) Date de publication et mention de la délivrance du brevet: **20.01.2010**
(21) Numéro de dépôt: 05825928.4
(22) Date de dépôt: 09.12.2005
(51) Int. Cl.: C08F 287/00, B29C 39/00

(54) **PLAQUES COULEES ACRYLIQUES RENFORCEES A L'IMPACT**
SCHLAGZÄHIGKEITSVERBESSERTE ACRYLGIESSPLATTE
CAST ACRYLIC PLATES WITH ENHANCED SHOCKPROOFNESS

(30) Priorité: 10.12.2004 FR 0413186; 26.01.2005 US 647056 P
(43) Date de publication de la demande: 28.11.2007
(73) Titulaire: ARKEMA FRANCE, 92700 Colombes (FR)
(72) Inventeur: GUERRET, Olivier, F-69890 La Tour De Salvagny (FR); CHENARD, Jean-Yves, F-64000 Pau (FR); EDERLE, Yannick, F-75012 Paris (FR)
(86) Numéro de dépôt international: PCT/FR2005/003087
(87) Numéro de publication internationale: WO 2006/061523

(56) Documents cités:
- WO-A-03/062293
- FR-A- 2 852 961

## Description

La présente invention est relative à un procédé de fabrication de plaques coulées acryliques renforcées à l'impact. Elle est aussi relative aux plaques coulées en elles-mêmes ainsi qu'à leurs utilisations.

Le polyméthacrylate de méthyle (PMMA) est un matériau apprécié pour ses excellentes propriétés optiques (notamment le *gloss* et une haute transparence avec une transmission d'au moins 90% de la lumière visible). Cependant, c'est aussi un matériau thermoplastique fragile sensible aux chocs. Cette caractéristique est liée au fait que la température de transition vitreuse du PMMA est de 110°C environ de sorte que dans ce matériau, les chaînes de polymère ne sont pas susceptibles de se mouvoir facilement à température ambiante. Pour certaines applications, il est donc nécessaire d'améliorer le renforcement à l'impact du PMMA tout en conservant sa transparence.

Le renforcement à l'impact du PMMA est généralement amélioré grâce à l'introduction dans la résine acrylique d'un modifiant choc du type noyau-écorce (aussi appelé communément « core-shell »), qui se présente sous forme de particules sphériques multicouches. Ces particules sont préparées par polymérisation en émulsion et récupérées sous forme de poudre par atomisation. Elles comprennent généralement une succession de couches « dures » et « molles ». On peut ainsi trouver des particules bicouches (mou-dur) ou tricouches (dur-mou-dur). Dans le cas des plaques acryliques coulées, obtenues par polymérisation du mélange de monomères dans un moule, le modifiant choc est préalablement dispersé dans le mélange de monomères. Dans le cas des plaques acryliques extrudées, le modifiant choc est compoundé en extrudeuse avec la résine acrylique. Dans les deux cas, il est nécessaire que le modifiant choc soit bien dispersé au sein de la résine acrylique afin de maintenir un niveau de résistance à l'impact constant et homogène.

### [Art antérieur]

La demande WO 01/57133 de la Demanderesse décrit un (co)polymère méthacrylique renforcé par un modifiant choc et par un copolymère élastomère greffé. Le modifiant choc peut être un additif de type noyau-écorce ou bien un copolymère séquencé comprenant au moins un bloc obtenu à partir d'un diène ou d'un (méth)acrylate d'alkyle ou aralkyle. Le copolymère élastomère greffé est obtenu à partir d'un copolymère élastomère sur lequel est greffé des groupes (co)polymères méthacryliques en position pendante.
Le renforcement à l'impact résulte donc de la combinaison de deux polymères, le modifiant choc et le copolymère élastomère greffé.

La demande internationale WO 99/29772 décrit le renforcement à l'impact de résines thermoplastiques semi-cristallines à l'aide d'un copolymère séquencé styrène-butadiène-méthacrylate de méthyle (SBM).

La demande internationale WO 02/055573 de la Demanderesse décrit le renforcement à l'impact d'un PMMA à l'aide d'un copolymère séquencé de type ABA dans lequel B désigne une séquence centrale obtenu à partir d'un diène, par exemple un SBM.

La demande internationale WO 03/062293 de la Demanderesse décrit un procédé de renforcement au choc d'une matrice thermoplastique à l'aide d'un copolymère séquencé B(-A)ₙ constitué d'une séquence centrale B et de n branches A et préparé à l'aide de la technique de polymérisation radicalaire contrôlée. Ce procédé s'applique au renforcement de nombreux thermoplastiques (PS, PC, PVDF, ...) et notamment à la fabrication de plaques coulées en PMMA.

Selon ce procédé, dans une 1^{ère} étape, la séquence centrale B est préparée à l'aide d'une alcoxyamine polyfonctionnelle. Dans une 2^{ème} étape, on mélange la séquence centrale B au(x) monomère(s) destiné(s) à former les branches A ce qui conduit à la formation du copolymère séquencé B(-A)ₙ. Dans cette étape, on peut rajouter un amorceur radicalaire au mélange ce qui conduit à la formation d'une matrice. Dans une 3^{ème} étape, le copolymère séquencé B(-A)ₙ, mélangé éventuellement à la matrice, est séparé des monomères résiduels par une évaporation sous vide à des températures allant jusqu'à 250°C (étape appelée désolventisation). Dans une 4^{ème} étape, le copolymère séquencé ainsi débarassé des monomères résiduels peut être ensuite extrudé avec une résine thermoplastique ou bien redissous dans un mélange de monomères qui est lui-même polymérisé ensuite. A l'issue de cette 4^{ème} étape, on obtient donc un copolymère séquencé dispersé dans une matrice.

Le procédé de WO 03/062293 appliqué à la fabrication de plaques coulées n'est pas susceptible de transposition industrielle. Il présente en effet le désavantage de nécessiter une étape de désolventisation suivie d'une étape de redissolution du copolymère. D'une part, ces deux opérations unitaires en augmentant le temps de cycle global affectent le rendement du procédé. D'autre part, l'étape de désolventisation est aussi susceptible de conduire à la formation de gels dans le copolymère séquencé, ce qui affecte sa redissolution dans le mélange de monomères et partant, peut détériorer la transparence de la plaque coulée.

De plus, selon le procédé décrit, notamment dans les exemples, il est préférable au cours de la 2^{éme} étape, d'amorcer la formation des branches A en même temps que celle de la matrice. Pour cela, le monomère A est mis au contact de deux types d'amorceurs, l'amorceur radicalaire classique et la séquence centrale réactivable. Le monomère A est donc consommé en même temps selon deux mécanismes de polymérisation radicalaire en compétition, présentant chacun une cinétique propre. Le contrôle de cette 2^{ème} étape est très délicat car il suppose d'accorder les vitesses de formation des blocs A et de la matrice. Cela suppose qu'il faille adapter la nature de l'amorceur radicalaire à la séquence centrale B et donc aussi adapter soigneusement le cycle de températures. On se trouve, dans la pratique, face à des exigences contradictoires et les compromis possibles conduisent le plus souvent :
- à une demixtion prématurée au cours de la polymérisation du copolymère B(-A)n qui migre à l'interface de la plaque et du moule. On obtient dans ce cas des plaques impossibles à démouler et/ou partiellement ou totalement opaques ;
- à des teneurs inadmissibles en méthacrylate de méthyle (MAM) résiduel qu'il est impossible d'éliminer une fois la plaque terminée.

La Demanderesse a maintenant amélioré le procédé de préparation de plaques acryliques coulées renforcées à l'impact décrit dans la demande internationale WO 03/062293**.** Le temps de cycle de ce procédé est amélioré par rapport à celui décrit dans WO 03/062293 car il ne nécessite aucune étape de désolventisation-redissolution. Le procédé de l'invention présente donc une productivité améliorée.

De plus, l'amorceur radicalaire est rajouté après et pas pendant la formation du copolymère séquencé B(-A)ₙ ce qui facilite le contrôle de la polymérisation et partant, permet d'éviter la formation de défauts à la surface de la plaque, la formation de zones opaques due à la demixtion du copolymère B(-A)n et la présence de MAM résiduel en quantité inacceptable.

La Demanderesse a aussi constaté avec surprise qu'un très bon compromis transparence/résistance à l'impact est obtenu si la proportion de la séquence centrale B dans la plaque est comprise entre 2 et 5%, de préférence entre 2,5 et 4,5%, de manière encore plus avantageuse entre 2,6 et 4,0%.

Selon une variante de l'invention, la fabrication de plaques coulées peut aussi être envisagée à partir de copolymère séquencé B(-A)ₙ déjà formé par ailleurs. On peut par exemple envisager que, par exemple pour des raisons de coûts ou de logistique, le copolymère soit préparé sur un autre lieu de production que celle des plaques coulées, éventuellement même par un autre fabricant. Le procédé comprend alors les étapes suivantes :
1. mélanger le copolymère séquencé B(-A)ₙ à du MAM et éventuellement à au moins un comonomère M et à au moins un amorceur radicalaire ;
2. couler le mélange obtenu à l'étape 1 dans un moule, puis le chauffer pour obtenir une plaque coulée.

De préférence, la proportion de la séquence centrale B dans la plaque est comprise en poids entre 2 et 5%, de préférence entre 2,5 et 4,5%, de manière encore plus avantageuse entre 2,6 et 4,0%.

De plus, le copolymère séquencé a tendance à s'organiser à l'intérieur de la matrice pour donner des particules réparties de façon homogène. Les particules se présentent sous forme de nodules sensiblement sphériques à l'intérieur desquels sont présents un ou plusieurs sous-nodule(s) ayant la même composition que l'homo- ou copolymère de MAM.

### [Brève description de l'invention]

Un premier objet de l'invention concerne un procédé de préparation de plaques coulées en PMMA renforcées à l'impact comprenant les étapes suivantes :
1. on chauffe un mélange comprenant :
   - au moins une alcoxyamine Z(-T)ₙ dans laquelle Z désigne un groupement multivalent et n un entier supérieur à 2, de préférence compris entre 2 et 10, avantageusement entre 2 et 8 et
   - le(s) monomère(s) destiné(s) à former une séquence centrale B à une température suffisante pour activer l'alcoxyamine et polymériser le(s) monomère(s) ;
2. on réactive la séquence centrale B éventuellement mélangée avec le(s) monomère(s) non consommé(s) de l'étape 1 en présence du(des) monomère(s) destiné(s) à former les branches A ;
3. on ajoute au mélange obtenu à l'étape 2 du MAM et éventuellement au moins un comonomère M copolymérisable par voir radicalaire avec le MMA et au moins un amorceur radicalaire ;
4. le mélange de l'étape 3 est coulé dans un moule, puis chauffé.

Selon une variante de l'invention, le procédé comprend les étapes suivantes :
1. on prépare un mélange comprenant :
   - un copolymère séquencé B(-A)ₙ constitué de n branches A telles que définies à l'une des revendications 4 ou 5 et reliées par des liaisons covalentes à une séquence centrale B telle que définie à l'une des revendications 2 ou 3, n désignant un nombre entier supérieur ou égal à 2, de manière préférée entre 2 et 10 et avantageusement entre 2 et 8
   - du MAM et
   - éventuellement au moins un comonomère M et au moins un amorceur radicalaire ;
2. le mélange obtenu à l'étape lest coulé dans un moule, puis il est chauffé pour obtenir une plaque coulée.

De préférence, la teneur en séquence centrale B dans la plaque étant comprise entre 2 et 5%, de préférence entre 2,5 et 4,5%, de manière encore plus avantageuse entre 2,6 et 4,0%.

L'invention concerne aussi une plaque susceptible d'être obtenue selon le procédé ou sa variante.

L'invention concerne aussi un homo- ou copolymère de MAM dans lequel est dispersé de façon homogène des particules de copolymère séquencé B(-A)ₙ se présentant sous forme de nodules sensiblement sphériques à l'intérieur desquels sont présents un ou plusieurs sous-nodule(s) ayant la même composition que l'homo- ou copolymère de MAM. Elle concerne aussi une plaque coulée comprenant un tel homo- ou copolymère. Enfin, elle concerne l'utilisation de la plaque coulée pour la fabrication de vitres, murs antibruit, écrans plats, panneaux publicitaires ou panneaux d'affichage.

### [Description détaillée]

**S'agissant du copolymère séquencé B(-A)ₙ,** celui-ci est constitué de n branches A reliées par des liaisons covalentes à une séquence centrale B, n désignant un nombre entier supérieur ou égal à 2, de manière préférée entre 2 et 10 et avantageusement entre 2 et 8. Les branches A peuvent être identiques ou différentes, c'est-à-dire avoir des compositions et/ou masses moléculaires moyennes identiques ou différentes.

Selon la définition donnée par l'IUPAC (voir IUPAC Compendium of Chemical Terminology, 2^{nde} édition (1997), 1996, 68, 2303), un copolymère séquencé est constitué de macromolécules ayant plusieurs séquences polymères chimiquement différentes c'est-à-dire dérivées de monomères différents ou bien dérivées des mêmes monomères mais selon des distributions différentes et reliées entre elles par des liaisons covalentes. On pourra aussi se reporter à Kirk-Othmer Encyclopedia of Chemical Technology 3éme éd., Vol.6, p.798 pour plus de détails sur ce type de copolymères. Le copolymère séquencé peut être linéaire, en étoile ou en peigne (*brush copolymer*). De préférence, il s'agit d'un copolymère linéaire, encore plus préférentiellement linéaire triséquencé de formule ABA (n=2). Le copolymère séquencé B(-A)ₙ est différent des particules du type noyau-écorce.

Dans le cadre de l'invention, il peut s'agir d'un copolymère triséquencé avec dans ce cas n=2 (une séquence centrale et 2 branches). A titre d'exemples de copolymère triséquencé, il pourra s'agir de PMMA-b-polyacrylate de n-butyle-b-PMMA, de PMMA-b-poly(acrylate de n-butyle-co-styrène)-b-PMMA, PMMA-b-poly(acrylate d'isobutyle-co-styrène)-b-PMMA, poly (MAM-co-acrylate de n-butyle)-b-poly(acrylate de n-butyle-co-styrène)-b-poly(MAM-co-acrylate de n-butyle) (b : symbole utilisé pour désigner un copolymère séquencé, co : symbole utilisé pour désigner un copolymère statistique)

Le copolymère séquencé B(-A)ₙ est préparé par la technique de polymérisation radicalaire contrôlée à l'aide d'une alcoxyamine de formule Z(-T)ₙ. Par cette technique, les branches A sont terminées par le nitroxyde T toutes ou bien en partie. Les branches peuvent être terminées en partie par le nitroxyde T lorsque par exemple il se produit une réaction de transfert entre un nitroxyde et un méthacrylate d'alkyle comme indiqué dans la réaction ci-dessous :

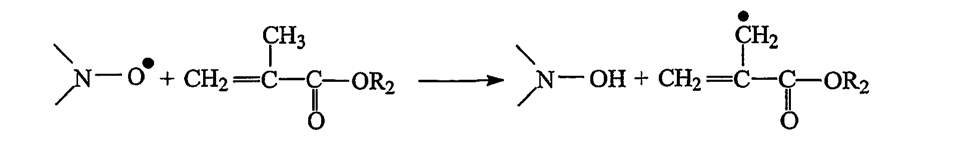

Le copolymère séquencé B(-A)n présente une masse moléculaire en poids comprise entre 30000 et 300000 g/mol, de préférence entre 35000 et 300000 g/mol. L'indice de polymolécularité est compris entre 1,5 et 3,0, de préférence entre 1,8 et 2,7 et encore préférentiellement entre 1,9 et 2,7.

**S'agissant de la séquence centrale B,** celle-ci présente une température de transition vitreuse (notée Tg) globale inférieure à 0°C. De préférence, sa masse moyenne en poids est supérieure à 5000 g/mol, de préférence supérieure à 20000 g/mol, et de manière avantageuse supérieure à 30000 g/mol. Elle est comprise de préférence entre 30000 et 300000 g/mol, de manière avantageuse entre 50000 et 250000 g/mol.

La séquence centrale B est préparée à partir d'un mélange comprenant au moins un monomère choisi parmi :
- les monomères acryliques de formule CH₂=CH-C(=O)-O-R₁
où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule CH₂=C(CH₃)-C(=O)-O-R₂ où R₂ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide méthacrylique, le MAM, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène.

Elle n'est pas préparée à partir d'un diène. L'homme de l'art sait combiner ces monomères de façon à régler la Tg globale de la séquence centrale B. Afin d'obtenir une Tg inférieure à 0°C, il est nécessaire d'utiliser au moins un monomère présentant une T_{g} inférieure à 0°C, par exemple l'acrylate de butyle ou l'acrylate de 2-éthylhexyle. L'indice de réfraction de la séquence centrale B est de préférence aussi proche que possible que celui de la matrice afin d'assurer la meilleure transparence possible.

La séquence centrale B peut être composée uniquement d'un monomère présentant une Tg inférieure à 0°C, par exemple l'acrylate de butyle ou l'acrylate de 2-éthylhexyle. La séquence centrale B peut aussi être composée d'au moins un acrylate d'alkyle et d'un monomère vinylaromatique. Avantageusement, elle est composée d'acrylate de butyle et de styrène dans le rapport massique acrylate de butyle/styrène compris entre 70/30 et 90/10, de préférence entre 75/25 et 85/15.

**S'agissant des branches A,** celles-ci présentent une Tg globale supérieure à 0°C et sont compatibles avec l'homo- ou le copolymère de MAM.

De préférence, la masse moyenne en poids de chaque branche A est comprise entre 15000 et 1000000 g/mol, de préférence entre 25000 et 500000 g/mol, avantageusement entre 35000 et 300000 g/mol. De préférence, afin d'améliorer la compatibilité du copolymère séquencé B(-A)n avec le (co)polymère méthacrylique ainsi que la transparence de la plaque, le rapport en poids des branches A à la séquence centrale B est supérieur à 1, de préférence supérieur à 1,5.

Chaque branche A est préparée à partir d'un mélange comprenant le MAM et éventuellement au moins un monomère choisi parmi :
- les monomères acryliques de formule CH₂=CH-C(=O)-O-R₁
où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule CH₂=C(CH₃)-C(=O)-O-R₂ où R₂ désigne un atome d'hydrogène, un groupement alkyle en C₂-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués comme l'alpha-méthylstyrène, le monochlorostyrène, le tertbutyl styrène.

Le MAM est majoritaire. De préférence, chaque branche A renferme une proportion de MAM comprise en poids entre 50 et 100%, de préférence entre 75 et 100%, avantageusement entre 90 et 100%.

**Le comonomère éventuel M** est tout comonomère copolymérisable par voie radicalaire avec le MAM. De préférence, il est choisi parmi:
- les monomères acryliques de formule CH₂=CH-C(=O)-O-R₁
où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule CH₂=C(CH₃)-C(=O)-O-R₂ où R₂ désigne un atome d'hydrogène, un groupement alkyle en C₂-C₄₀ linéaire, cyclique ou ramifié éventuellement substitué par un atome d'halogène, un groupement hydroxy, alcoxy, cyano, amino ou époxy tels que par exemple l'acide méthacrylique, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène ;
- les monomères acryliques polyfonctionnels donnant lieu à une réticulation tels que par exemple les polyacrylates de polyols, les polyacrylates d'alkylèneglycol ou l'acrylate d'allyle, le diacrylate d'éthylène glycol, de 1,3-butylène glycol, de 1,4-butylène glycol ;
- les monomères méthacryliques polyfonctionnels donnant lieu à une réticulation tels que les polyméthacrylates de polyols, les polyméthacrylates d'alkylèneglycol ou le méthacrylate d'allyle, le diméthacrylate d'éthylène glycol, de 1,3-butylène glycol, de 1,4-butylène glycol ;
- les monomères vinylaromatiques tels que par exemple le styrène, les styrènes substitués, l'alpha-méthylstyrène, le monochlorostyrène, le tertbutyl styrène ;
- les monomères vinylaromatiques polyfonctionnels donnant lieu à une réticulation comme par exemple le divinylbenzène ou le trivinylbenzène.

De préférence, M est l'acrylate de méthyle, d'éthyle, de butyle ou le diméthacrylate de 1,4-butanediol (BDMA). La proportion en poids MAM/comonomère M est comprise entre 90/10 et 100/0, de préférence entre 95/5 et 100/0.

**S'agissant de l'alcoxyamine,** celle-ci a pour formule générale Z(-T)n dans laquelle Z désigne un groupement multivalent susceptible de libérer après activation plusieurs sites radicalaires. L'activation se produit par rupture des liaisons covalentes Z-T. n est un entier supérieur à 2, de préférence compris entre 2 et 10, avantageusement entre 2 et 8.
n représente la fonctionnalité de l'alcoxyamine, c'est-à-dire le nombre de nitroxydes T libérables par l'alcoxyamine selon le mécanisme :

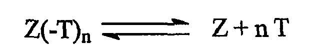

En présence de monomère(s), l'alcoxyamine activée par chauffage amorce la polymérisation. Le schéma ci-dessous illustre la préparation d'un copolymère séquencé polyM2-polyM1-polyM2 à partir d'une alcoxyamine pour laquelle n=2. Le monomère M1 est d'abord polymérisé après activation de l'alcoxyamine, puis le bloc polyM1 terminé est réactivé pour réamorcer la polymérisation du monomère M2:

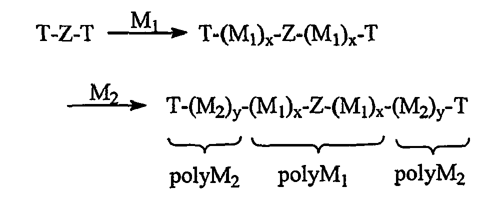

Le principe de la préparation de copolymères séquencé reste valable pour n>2.

A titre d'exemple, Z peut être choisi parmi les groupements (I) à (VIII) suivantes : 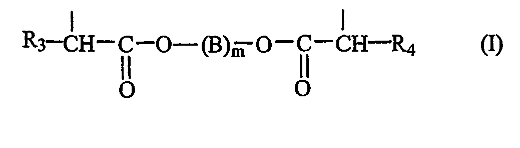 dans laquelle R₃ et R₄ identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, C1, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10 ; 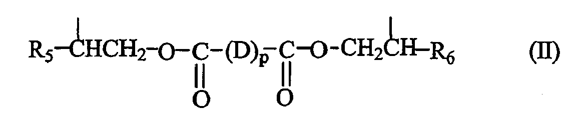 dans laquelle R₅ et R₆, identiques ou différents, représentent des radicaux aryle, pyridyle, furyle, thiényle éventuellement substitués par un atome d'halogène tel que F, C1, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; D représente un radical alkylène, linéaire ou ramifié, ayant un nombre d'atomes de carbone allant de 1 à 6, un radical phénylène, un radical cycloalkylène ; p étant un nombre entier allant de 1 à 10 ; 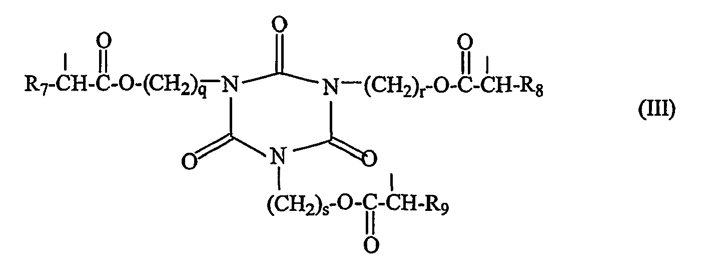 dans laquelle R₇, R₈ et R₉, identiques ou différents, ont les mêmes significations que R₃ et R₄ de la formule (I), q, r et s sont des nombres entiers allant de 1 à 10 ; 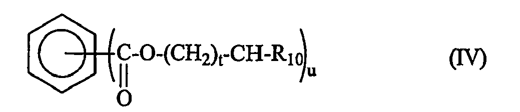 dans laquelle R₁₀ a la même signification que R₅ et R₆ de la formule (II), t est un nombre entier allant de 1 à 4, u est un entier compris entre 2 et 6 (le groupement aromatique est substitué); 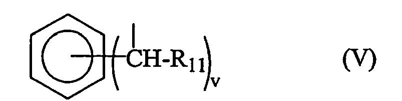 dans laquelle R₁₁ a la même signification que le radical R₁₀ de la formule (IV) et v est un entier compris entre 2 et 6; 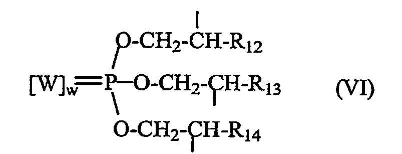 dans laquelle R₁₂, R₁₃ et R₁₄, identiques ou différents, représentent un radical phényle, éventuellement substitué par un atome d'halogène tel que C1, Br, ou bien par un radical alkyle, linéaire ou ramifié, ayant un nombre d'atomes de carbone allant de 1 à 10 ; W représente un atome d'oxygène, de soufre, de sélénium, w est égal à zéro
ou 1 ; 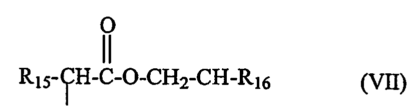 dans laquelle R₁₅ a la même signification que R₃ de la formule (I) , R₁₆ a la même signification que R₅ ou R₆ de la formule (II) ; 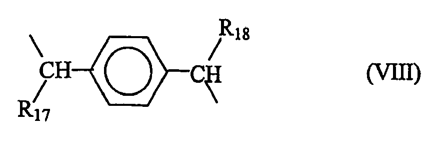 dans laquelle R₁₇ et R₁₈ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome.

T est un nitroxyde, c'est-à-dire un radical libre stable présentant un groupement =N-O^{•} sur lequel est présent un électron célibataire. On désigne par radical libre stable un radical tellement persistant et non réactif vis-à-vis de l'air et de l'humidité dans l'air ambiant, qu'il peut être manipulé et conservé pendant une durée bien plus longue que la majorité des radicaux libres (voir à ce propos, Accounts of Chemical Research 1976, 9, 13-19). Il se distingue ainsi des radicaux libres dont la durée de vie est éphémère (de quelques millisecondes à quelques secondes) comme les radicaux libres issus des amorceurs habituels de polymérisation (peroxydes, hydroperoxydes, azoïques). Les radicaux libres amorceurs de polymérisation tendent à accélérer la polymérisation alors que les radicaux libres stables tendent généralement à la ralentir. On peut dire qu'un radical libre est stable au sens de la présente invention s'il n'est pas amorceur de polymérisation et si, dans les conditions habituelles de l'invention, la durée de vie moyenne du radical est d'au moins une minute.

T est représenté par la structure : 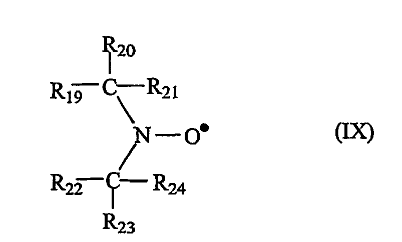 dans laquelle R₁₉, R₂₀, R₂₁, R₂₂, R₂₄ et R₂₄ désignent des groupements :
- alkyles linéaires ou branchés en C₁-C₂₀, de préférence en C₁-C₁₀ tels que méthyle, éthyle, propyle, butyle, isopropyle, isobutyle, tertiobutyle, néopentyle, substitués ou non,
- aryles en C₆-C₃₀ substitués ou non tels que benzyle, aryl(phényl)
- cycliques saturés en C₁-C₃₀
   et dans laquelle les groupements R₁₉ et R₂₂ peuvent faire partie d'une structure cyclique R₁₉-CNC-R₂₂ éventuellement substituée pouvant être choisie parmi : 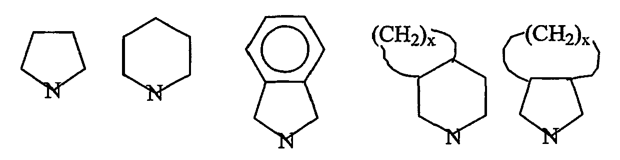 dans lesquelles x désigne un entier compris entre 1 et 12.

A titre d'exemples, on pourra utiliser les nitroxydes:

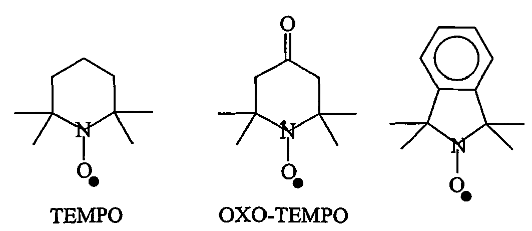

De manière particulièrement préférée, les nitroxydes de formule (X) sont utilisés dans le cadre de l'invention car ils permettent de bien contrôler la polymérisation :

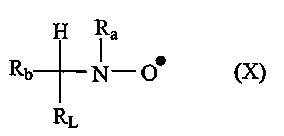

Rₐ et R_{b} désignent des groupements alkyles identiques ou différents possédant de 1 à 40 atomes de carbone, éventuellement reliés entre eux de façon à former un cycle et éventuellement substitués par des groupements hydroxy, alcoxy ou amino, R_{L} désigne un groupement monovalent de masse molaire supérieur à 16 g/mol, de préférence supérieur à 30 g/mol. De préférence, le groupement R_{L} a une masse molaire comprise entre 40 et 450 g/mol. Il s'agit de préférence d'un groupement phosphoré de formule générale (XI) _{:} 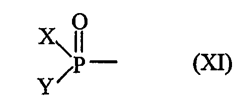 dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, R_{L} est un groupement phosphonate de formule : 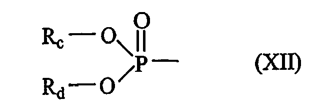 dans lequel R_{c} et R_{d} sont deux groupements alkyles identiques ou différents, éventuellement reliés de manière à former un cycle, comprenant de 1 à 40 atomes de carbone, éventuellement substitués ou non.

Le groupement R_{L} peut également comprendre au moins un cycle aromatique tel que le radical phényle ou le radical naphtyle, substitué par exemple par un ou plusieurs radical(aux) alkyle comprenant de 1 à 10 atomes de carbone.

Les alcoxyamines de formule (XIII) comprenant le nitroxyde de formule (X) sont préférées :

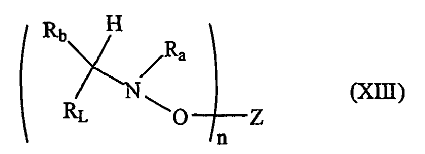

A titre d'exemple de nitroxyde de formule (X) pouvant être porté par l'alcoxyamine (XIII), on peut citer le N-tertiobutyl-1-phényl-2-méthylpropyl nitroxyde, le N-(2-hydroxyméthylpropyl)-1-phényl-2-méthylpropyl nitroxyde, le N-tertiobutyl-1-dibenzylphosphono-2,2-diméthyl-propyl nitroxyde, le N-tertiobutyl-1-di(2,2,2-trifluoroéthyl)phosphono-2,2-diméthylpropyl-nitroxyde, le N-tertiobutyl[(1-diéthylphosphono)-2-méthylpropyl]nitroxyde, le N-(1-méthyléthyl)-1-cyclohexyl-1-(diéthyl-phosphono)nitroxyde, le N-(1-phénylbenzyl)-[(1-diéthylphosphono)-1-méthyléthyl]nitroxyde, le N-phényl-1-diéthylphosphono-2,2-diméthylpropylnitroxyde, le N-phényl-1-diéthylphosphono-1-méthyléthylnitroxyde, le N-(1-phényl2-méthylpropyl)-1-diéthylphosphonométhyléthylnitroxyde, ou
encore le nitroxyde de formule

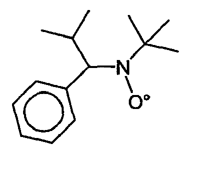

Le nitroxyde de formule (XIV) est particulièrement préféré :

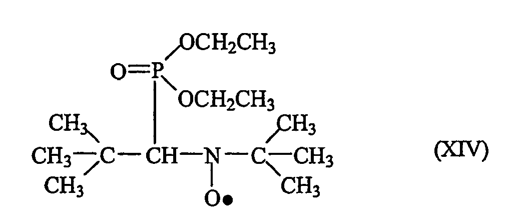

Il s'agit du N-tertiobutyl-1-diéthylphosphono-2,2-diméthylpropyl nitroxyde, couramment appelé SG1 pour simplifier.

Une alcoxyamine peut être préparée par l'une des recettes décrites par exemple dans US590549 ou dans FR99.04405. Une méthode pouvant être utilisée consiste à réaliser le couplage d'un radical carboné avec un nitroxyde. Le couplage peut être réalisé à partir d'un dérivé halogéné en présence d'un système organométallique comme CuX/ligand (X=C1 ou Br) selon une réaction de type ATRA (Atom Transfer Radical Addition) tel que décrit par D. Greszta et coll. dans Macromolecules 1996, 29, 7661-7670.

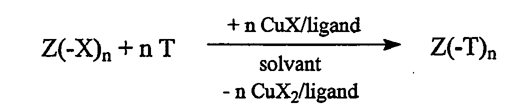

Des alcoxyamines pouvant être utilisées dans le cadre de l'invention sont représentées ci-dessous :

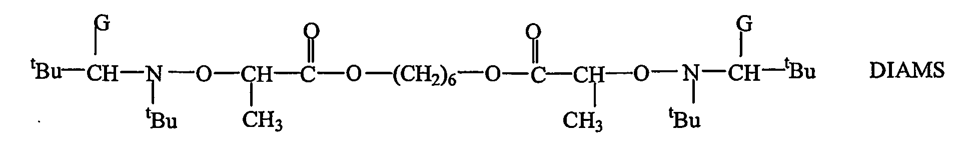

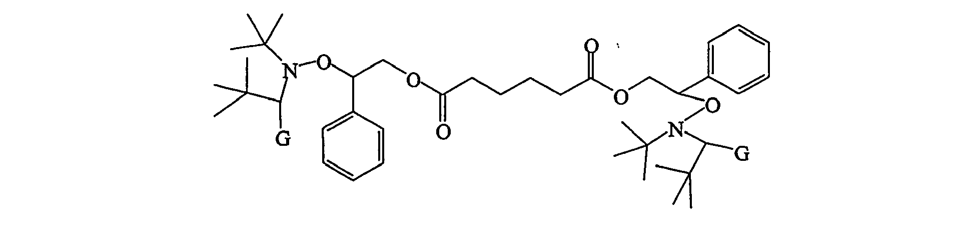

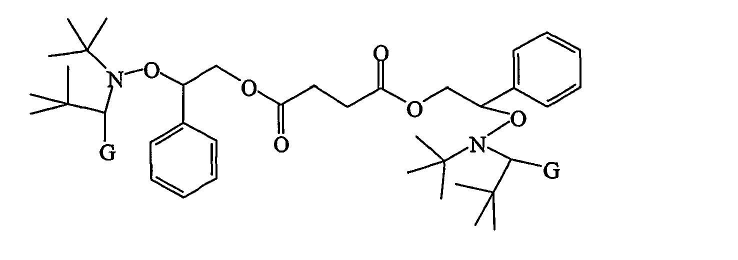

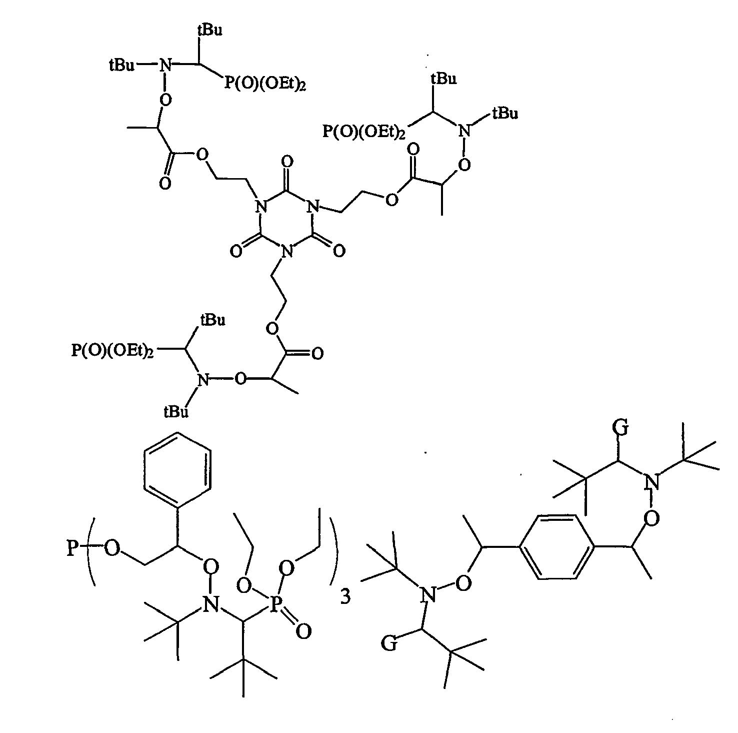

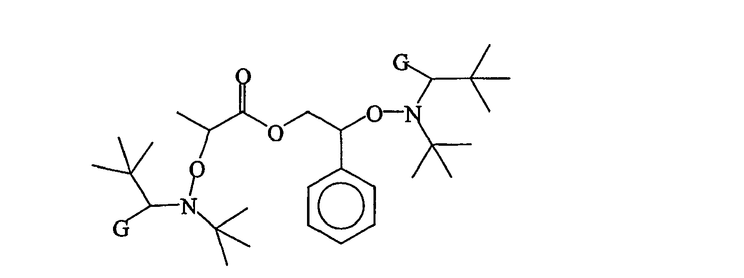

G désigne le groupement -P(=O) (OEt)₂.

On ne sortirait pas du cadre de la présente invention en combinant plusieurs alcoxyamines. Ces mélanges pourraient comprendre ainsi par exemple une alcoxyamine ayant n1 nitroxydes attachés et une alcoxyamine ayant n2 nitroxydes attachés avec n1 différent de n2. Il pourrait s'agir aussi d'une combinaison d'alcoxyamines porteuses de nitroxydes différents.

**S'agissant de l'amorceur radicalaire,** il peut être choisi parmi les peroxydes de diacyles, les peroxyesters, les peroxydes de dialkyle, les peroxyacétals, les composés azoïques. Des amorceurs radicalaires pouvant convenir sont par exemple le carbonate d'isopropyle, le peroxyde de benzoyle, de lauroyle, de caproyle, de dicumyle, le perbenzoate de tertiobutyle, le 2-éthyl perhexanoate de tertiobutyle, l'hydroperoxyde de cumyle, le 1,1-di(tert-butylperoxy)-3,3,5-trimethylcyclohexane, le peroxyisobutyrate de tertiobutyle, le peracétate de tertiobutyle, le perpivalate de tertiobutyle, le perpivalate d'amyle, le peroctoate de tertiobutyle, l'azodiisobutyronitrile (AIBN), l'azodiisobutyramide, le 2,2'-azo-bis(2,4-diméthylvaléronitrile), le 4,4'-azo-bis(4-cyanopentanoïque. On ne sortirait pas du cadre de l'invention en utilisant un mélange d'amorceurs radicalaires choisis dans la liste ci-dessus. L'amorceur radicalaire préféré est l'azodiisobutyronitrile.

La teneur en amorceur radicalaire par rapport aux monomères du mélange qui est coulé dans le moule varie de 100 à 2000 ppm (en poids), de préférence entre 200 et 1000 ppm en poids. Cette teneur peut varier en fonction de l'application et de l'épaisseur visées.

**D'autres ingrédients** peuvent être rajoutés à titre optionnel dans le mélange qui est coulé dans le moule (au cours de l'étape 3 du procédé selon l'invention ou de l'étape 1 de la variante). On peut citer à titre non limitatif des colorants organiques ou des pigments minéraux ; des plastifiants ; des additifs anti-UV tels que le TINUVIN® P de Ciba utilisé à des teneurs de 0 à 1000 ppm et de préférence 50 à 500 ppm par rapport au mélange qui est coulé dans le moule ; des stabilisants lumière ou chaleur comme par exemple le TINUVIN^{®} 770 ; des antioxydants ; des additifs ignifugeants tels que par exemple le tris (2-chloro-propyle) phosphate ; des agents épaississants tel que par exemple l'acétobutyrate de cellulose ; des agents de démoulage tels que par exemple le dioctyl sulfosuccinate de sodium utilisés à des teneurs de 0 à 500 ppm et de préférence 0 à 200 ppm par rapport au mélange qui est coulé dans le moule ; des charges minérales ou organiques (par ex. polyamide, PTFE, BaSO₄) destinées à diffuser la lumière (par exemple pour donner des plaques pouvant être éclairées par la tranche) ou opacifier la plaque. Ces charges sont le plus souvent utilisées sous forme de pâtes préfabriquées dans un plastifiant de type dialkyl phtalate ; au moins un additif ayant pour fonction de réfléchir le rayonnement infrarouge et/ou un additif ayant pour fonction de bloquer les rayonnements UV.

Il peut s'agir aussi d'un agent limiteur de chaînes couramment utilisé dans le domaine des plaques coulées, par exemple de gamma-terpinène ou de terpinolène à des teneurs comprises entre 0 et 500 ppm et de préférence entre 0 et 100 ppm par rapport aux monomères du mélange qui est coulé dans le moule. L'agent limiteur de chaînes peut aussi être ajouté avant la formation des branches A (au cours de l'étape 2 du procédé selon l'invention) à des teneurs comprises entre 0 et 500 ppm et de préférence entre 0 et 100 ppm par rapport au(x) monomère(s) destiné(s) à former les branches A.

Le renforcement à l'impact selon l'invention est réalisé grâce au copolymère B(-A)ₙ mais il n'est pas exclu d'ajouter en synergie un modifiant choc par exemple du type noyau-écorce, notamment du type-mou-dur ou dur-mou-dur (par exemple vendu sous la marque DURASTRENGTH^{®} ou METABLEND^{®} (par ex. D320) de la société ARKEMA). La proportion modifiant choc/copolymère séquencé B(-A)ₙ peut ainsi être comprise entre 90/10 et 10/90. De préférence, le copolymère B(-A)ₙ est utilisé seul et aucun additif de type core-shell n'est ajouté.

**S'agissant du procédé,** celui-ci comprend les étapes suivantes :
Au cours de la 1^{ère} étape, on chauffe un mélange comprenant au moins une alcoxyamine Z(-T)n et le(s) monomère(s) destiné(s) à former la séquence centrale B à une température suffisante pour activer l'alcoxyamine et polymériser le(s) monomère(s).

La température est choisie de façon à ce que l'alcoxyamine soit activée en conservant le caractère vivant de la polymérisation radicalaire contrôlée. De préférence, elle est comprise entre entre 80 et 150°C, avantageusement entre 80 et 130°C. Cette température est spécifique de l'alcoxyamine utilisée et du(des) monomère(s) à polymériser. La durée de la polymérisation peut varier entre 30 minutes et 8 heures, de préférence entre 1 et 8 heures, avantageusement entre 2 et 6 heures.

Il est possible de rajouter également au mélange du nitroxyde afin d'assurer un meilleur contrôle de la polymérisation. Le nitroxyde qui est rajouté peut être identique à celui qui est porté sur l'alcoxyamine ou différent. La proportion molaire du nitroxyde ajouté par rapport à l'alcoxyamine est comprise entre 0 et 20%, de préférence entre 0 et 10%.

La conversion du (des) monomère(s) peut varier entre 10 et 100%. Cependant, de préférence, la polymérisation est arrêtée pour une conversion comprise entre 50 et 100%, et avantageusement entre 50 et 80%.

A l'issue de cette 1^{ére} étape, on obtient la séquence centrale B, éventuellement mélangée avec le(s) monomère(s) non consommé(s).

Au cours de la 2^{éme} étape, on réactive la séquence centrale B éventuellement mélangée avec le(s) monomère(s) non consommé(s) de la 1^{ère} étape en présence du(des) monomère(s) destiné(s) à former les branches A.

Si la conversion à la 1^{ère} étape est inférieure à 100%, on peut trouver dans le mélange le(s) monomère(s) non entièrement polymérisé(s) de la 1^{ère} étape. Le mélange comprend donc la séquence centrale B, le(s) monomère(s) destinés à former les branches A que l'on a ajouté(s) et éventuellement, le(s) monomère(s) non entièrement polymérisé(s) à la 1^{ére} étape. La proportion de la séquence centrale B dans ce mélange est comprise en poids entre 1 et 20 %, de préférence entre 1 et 15 % et avantageusement entre 2 et 10 %.

Les branches A sont formées à une température comprise entre 80 et 150°C, de préférence entre 80 et 130°C. La durée de la polymérisation peut varier entre 30 minutes et 8 heures, de préférence entre 1 et 4 heures, avantageusement entre 1 et 2 heures. Comme lors de l'étape 1, il est préférable d'éviter la présence d'oxygène. On peut rajouter du nitroxyde au cours de cette étape, ce nitroxyde pouvant être différent de celui porté par l'alcoxyamine. La proportion de nitroxyde ajoutée à cette étape est comprise entre 0 et 20% molaire, de préférence entre 0 et 10% molaire.

Au cours de la 2^{ème} étape, la conversion peut varier entre 10 et 100%. Cependant, afin de ne pas obtenir un mélange trop visqueux, il est préférable de limiter la conversion entre 5 et 50%, de préférence entre 5 et 30%, de sorte que le mélange obtenu à l'issue de cette 2^{ème} étape comprend le copolymère séquencé B(-A)n mélangé au(x) monomère(s) non converti(s). Ce mélange est communément appelé « sirop ».

Au cours de la 3^{ème} étape, on ajoute au mélange obtenu à la 2^{ème} étape du MAM et éventuellement au moins un autre monomère M et au moins un amorceur radicalaire.

A l'issue de la 3^{ème} étape, on obtient un mélange comprenant le MAM, le copolymère B(-A)ₙ, au moins un amorceur radicalaire et éventuellement au moins un comonomère M. Il se peut qu'il reste des monomères non consommés à la 1^{ère} et/ou 2^{ème} étape ainsi que les éventuels agents limiteurs de chaînes. Le MAM est majoritaire.

Les étapes 1-3 peuvent être conduites dans un réacteur qui peut être fermé ou ouvert. Il peut s'agir du même réacteur pour les 3 étapes. Il est préférable d'éviter la présence d'oxygène. Pour ce faire, le mélange réactionnel est en général dégazé sous pression réduite et le réacteur inerté à l'aide d'un balayage à l'azote ou à l'argon après introduction des réactifs.

Au cours de la 4^{ème} étape, le mélange de la 3^{ème} étape est coulé dans un moule, puis chauffé. Le moule est formé de deux plaques de verre séparées par un joint en PVC par exemple. Le chauffage peut par exemple consister à utiliser une cuve remplie d'eau ou une étuve ventilée dans laquelle on place en rangée les moules avec leur mélange et dont la température est modifiée.

**S'agissant de la variante du procédé,** celle-ci comprend les étapes suivantes :
Au cours de la 1^{ère} étape, un copolymère séquencé B(-A)ₙ est mélangé à du MAM et à éventuellement au moins un comonomère M et au moins un amorceur radicalaire.

De préférence, le copolymère séquencé est réactivable (c'est-à-dire que lorsqu'il est chauffé en présence de monomère(s), il amorce la polymérisation du(des) monomère(s)). De préférence, la proportion de séquence centrale B dans ce mélange est comprise en poids entre 2 et 5%, de préférence entre 2,5 et 4,5%, de manière encore plus avantageuse entre 2,6 et 4,0%.

Le mélange comprend le MAM, le copolymère B(-A)ₙ, au moins un amorceur radicalaire et éventuellement au moins un comonomère M. Le copolymère séquencé B(-A)ₙ est dit réactivable

Au cours de la 2^{ème} étape, le mélange obtenu à la 1^{ère} étape est coulé dans un moule, puis il est chauffé pour obtenir une plaque coulée.

Selon l'invention ou sa variante, le chauffage du mélange coulé dans le moule peut être effectué à température constante (isotherme) ou bien il peut suivre une programmation de températures bien précis, par exemple un 1^{er} palier à environ 70°C, suivie d'un 2^{ème} palier vers 120°C. Après refroidissement, on retire du moule la plaque obtenue.

Le procédé de la présente invention est applicable à la production de plaques acryliques industrielles de différentes épaisseurs, avantageusement comprises entre 2 et 30 mm, de préférence de 2,5 à 12 mm.. L'homme du métier sait adapter le procédé de fabrication, notamment pour ce qui concerne la 3^{ème} étape (choix de l'amorceur radicalaire et de la programmation de températures), en fonction de l'épaisseur de la plaque acrylique.

**S'agissant de l'homo- ou copolymère de MAM,** celui-ci est formé lors de la 4^{ème} étape du procédé selon l'invention et lors de la 2^{ème} étape selon la variante. Il est constitué majoritairement de MAM.

**S'agissant de la plaque coulée,** celle-ci comprend un homo-ou copolymère du MAM qui constitue la matrice dans laquelle est dispersé de façon homogène le copolymère séquencé B(-A)ₙ. Le copolymère séquencé a tendance à s'organiser à l'intérieur de la matrice pour donner des particules réparties de façon homogène. La matrice constitue donc une phase continue en homo- ou copolymère de MAM. Les particules, visibles à l'aide de la microscopie électronique ou du microscope à force atomique, se présentent sous forme de nodules sensiblement sphériques à l'intérieur desquels sont présents un ou plusieurs sous-nodule(s) ayant la même composition que l'homo- ou copolymère de MAM. La plaque coulée donc constituée d'homo-ou copolymère de MAM dans lequel est dispersé de façon homogène des particules de copolymère séquencé B(-A)ₙ se présentant sous forme de nodules sensiblement sphériques à l'intérieur desquels sont présents un ou plusieurs sous-nodule(s) ayant la même composition que l'homo- ou copolymère de MAM.

La taille des particules est de l'ordre de 100-600 nm, de préférence 100-400 nm, de manière avantageuse 100-250 nm. La distribution des tailles de particules peut être plus ou moins large, il est toutefois avantageux d'avoir une distribution de tailles de particules étroite.

Dans le cas des matériaux acryliques, un critère important est le compromis transparence/résistance à l'impact. Dans le tableau 5 de WO 03/062293**,** le procédé de fabrication de plaques coulées qui est décrit montre que l'augmentation de la teneur en séquence centrale B permet d'améliorer la résistance à l'impact de la plaque mais au détriment de sa transparence. Le procédé de la présente invention permet d'obtenir un meilleur compromis transparence/résistance à l'impact qu'avec le procédé de WO 03/062293**.** En effet, il a été constaté avec surprise que le compromis transparence/résistance à l'impact est optimal pour une teneur en séquence centrale B dans la plaque comprise entre 2 et 5%, de préférence entre 2,5 et 4,5%, de manière encore plus avantageuse entre 2,6 et 4,0%.

De plus, il a été constaté aussi que la transparence des plaques coulées renforcées à l'impact selon le procédé décrit est moins sensible à la température qu'une plaque coulée renforcée à l'aide de particules de type core-shell.

### Utilisation des plaques coulées selon l'invention

Les plaques fabriquées peuvent être utilisées pour la fabrication de vitres (notamment dans le vitrage automobile comme vitres avant, arrière, latérales ou toît transparent), murs antibruit, écrans plats, panneaux publicitaires ou panneaux d'affichage, etc. ou bien être transformées en articles divers par thermoformage, découpage, polissage, collage, pliage. Ces plaques peuvent notamment servir à fabriquer des articles sanitaires (baignoires, éviers, receveurs de douche,...). Pour cela, les plaques sont thermoformées selon une manière connue de l'homme du métier.

Dans le cas du vitrage automobile, les plaques peuvent avantageusement comprendre au moins un additif ayant pour fonction de réfléchir le rayonnement infrarouge et/ou un additif ayant pour fonction de bloquer les rayonnements UV.

### [Exemples]

### Microscopie par force atomique

Les observations microscopiques des morphologies des plaques ont été obtenues par microscopie atomique (en « tapping mode ») après surfaçage avec un couteau diamant et à une température de -60°C. Seules les images en mode phase, sensibles aux propriétés viscoélastiques du matériau, sont reportées.

### Chromatographie de perméation de gel (GPC)

Les masses moléculaires (Mₙ : en nombre, M_{w} : en poids) ont été déterminées à l'aide de la chromatographie de perméation de gel par rapport à un étalon PMMA.

### Autres mesures

La résistance à l'impact a été déterminée selon la norme norme EN 179-2 eU (choc Charpy non entaillé, énergie totale de 2 J et vitesse d'impact de 2,9 m s⁻¹). La résistance à l'impact est exprimée en kJ/m².

Les caractéristiques optiques ont été déterminées à l'aide d'un colorimètre Datacolor Spectraflash. Les températures Vicat ont été obtenues à l'aide d'un appareil Ceast selon la norme ISO 306.

### Exemple 1 : fabrication d'une plaque coulée renforcée

### 1^{ère} étape : préparation d'une séquence centrale B à base d'acrylate de butyle et de styrène

On introduit dans un réacteur métallique de 15 litres muni d'un agitateur à double spirale, d'une double enveloppe de chauffage par circulation d'huile et d'une prise vide / azote 6880 g de d'acrylate de butyle, 1120 g de styrène, 55 g de dialcoxyamine DIAMS (de pureté 82% avec une teneur de 0,48% de SG1 libre) soit 45 g de DIAMS pur, 1,6 g de SG1 à 85% de pureté (soit 1,4 g de SG1 pur) ce qui représente un excès de 5% molaire par fonction alcoxy portée par le DIAMS en tenant compte des 0,48 % de SG1 libre déjà présent dans le DIAMS

Après l'introduction des réactifs, le mélange réactionnel est dégazé à trois reprises grâce à un cycle vide/azote. Le réacteur est alors fermé puis l'agitation (50 tr/min) et le chauffage (consigne de température : 125°C) sont mis en route. La température du mélange réactionnel atteint 115°C en 30 min environ. La pression s'établit vers 1,45 bar. La température du réacteur est maintenue en palier à 115°C pendant 250 min. On récupère après refroidissement 8008 g d'un mélange à 71% d'extrait sec c'est-à-dire une solution à 71% de copolymère acrylate de butyle/styrène dans l'acrylate de butyle en excès. Le rapport en poids acrylate de butyle / styrène du séquence centrale B obtenu est 80,3 / 19,7. L'analyse par chromatographie d'exclusion de taille de la séquence centrale B donne les résultats suivants :
Mₙ : 69750 g/mol ; M_{w} : 124830 g/mol ; polymolécularité : 1,8.

### 2^{ème} étape : préparation du copolymère B(-A)ₙ à partir de la séquence centrale précédente.

On introduit dans un réacteur métallique de 15 litres muni d'un agitateur à deux spirales contrarotatives, d'une double enveloppe de chauffage avec circulation d'huile et d'une prise vide/azote 493 g de la solution à 71% de la 1^{ère} étape, 4504 g de MAM non stabilisé (MAM), 5 g d'une solution à 5% dans le MAM de γ-terpinène (soit 50 ppm de γ-terpinène par rapport au mélange)

Après introduction des réactifs, le mélange réactionnel est dégazé à trois reprises sous vide/azote. Le réacteur est alors fermé puis l'agitation (50 tours/min) et le chauffage (consigne de température : 90°C) sont mis en route. La température du mélange réactionnel atteint 85°C en 30 min environ. La durée de l'essai est décomptée à partir de cet instant. La pression s'établit vers 1,6 bar. La température du réacteur est maintenue en palier vers 90°C pendant 25 min. On récupère 4950 g d'un sirop à 18% de copolymère séquencé. Le rapport en poids des branches PMMA par rapport à la séquence centrale en copolymère acrylate de butylestyrène est de 1,6.

### 3^{ème} étape : préparation d'une plaque de PMMA de 4 mm d'épaisseur à partir du sirop de la 2^{ème} étape.

On verse dans une fiole à vide conique 80 g du sirop obtenu à la 2^{ème} étape, 85 g de MAM non stabilisé, 3,0 g d'une solution à 5% dans le MAM d'azobisisobutyronitrile (soit une teneur de 900 ppm d'AIBN par rapport au mélange), 1,7 g d'une solution à 1% dans le MAM de γ-terpinène (soit une teneur de 100 ppm de γ-terpinène par rapport au mélange)

Les constituants sont mélangés puis soigneusement dégazés sous vide pendant au moins 20 min. Le mélange est alors versé dans un moule de dimensions 200x200x4 mm constitué de deux plaques de verre muni d'un joint en élastomère. Le moule est alors introduit dans une étuve à circulation d'air programmable. La polymérisation est effectuée pendant 6 heures à une température de 70°C.

Après refroidissement, on récupère une plaque de PMMA renforcée à l'impact possédant les caractéristiques suivantes : épaisseur : 4 mm, démoulage facile, la surface lisse et brillante. La teneur en séquence centrale B dans la plaque : 3,4% en poids. Ses caractéristiques GPC sont : M_{w} :1112115 g/mol ; polymolécularité : 3,2.

La plaque est transparente et sans aucun jaunissement. les caractéristiques colorimétriques en transmission sont les suivantes : L* : 96,81 / a* : 0,06 / b* : 0,13, haze : 0,87, Yellow index YIE 313 : 0,29, White index WIE 313 : 91,4, transmission à 550 nm : 91,98.
résistance à l'impact : 28,4 +/- 0,8 kJ/m²
température Vicat : 108,5 °C

### EXEMPLE 2 préparation de plaques coulées renforcées à plusieurs teneurs en séquence centrale B

### 1^{ère} étape : préparation d'une séquence centrale à base d'acrylate de butyle et de styrène

On introduit dans un réacteur métallique de 2 litres muni d'un agitateur à hélice, d'une double enveloppe de chauffage par circulation d'huile et d'une prise vide / azote 616 g de d'acrylate de butyle, 84 g de styrène, 2,4 g de dialcoxyamine DIAMS (94% de pureté et 0,35 % SG1 libre) soit 2,3 g de DIAMS pure, 0,09 g de SG1 à 85% de pureté (soit 0,077 g de SG1 pur), ce qui représente un excès de 5% molaire par fonction alcoxy portée par le DIAMS en tenant compte des 0,35% de SG1 libre déjà présent dans le DIAMS.

Après introduction des réactifs, le mélange réactionnel est dégazé à trois reprises sous vide/azote. Le réacteur est alors fermé puis l'agitation (50 tr/min) et le chauffage (consigne de température : 125°C) sont mis en route. La température du mélange réactionnel atteint 113°C en 30 min environ. La pression s'établit vers 1,5 bar. La température du réacteur est maintenue en palier à 115°C pendant 522 min. On récupère après refroidissement 608 g d'un mélange à 67% d'extrait sec. L'acrylate de butyle en excès est ensuite éliminé par évaporation à 70°C sous pression réduite pendant 3 h. et remplacé par 700 g de MAM. On récupère ainsi 1110 g d'une solution à 37% dans le MAM d'un macro radical « strippé » (débarrassé de son acrylate de butyle en excès). Le rapport en poids acrylate de butyle : styrène du macro radical obtenu est 83:17. L'analyse par GPC de la séquence centrale B donne les résultats suivants : Mₙ : 96430 g/mol ; M_{w} : 201000 g/mol ; polymolécularité : 2,1.

**2^{ème} étape** : préparation d'un sirop contenant un tribloc préparé à partir du macro radical précédent. On introduit dans le réacteur déjà utilisé pour l'étape 1 : 132 g de la solution à 37% / MAM du macro radical de l'étape 1, 566 g de MAM non stabilisé, 0,7 g d'une solution à 5% dans le MAM de γ-terpinène (50 ppm γ-terpinène).

Après introduction des réactifs, le mélange réactionnel est dégazé à trois reprises sous vide/azote. Le réacteur est alors fermé puis l'agitation (50 tours/min) et le chauffage sont mis en route. La température du mélange réactionnel atteint 85°C en 15 min environ. La durée de l'essai est décomptée à partir de cet instant. La pression s'établit vers 1,5 bar. La température du mélange réactionnel est maintenue en palier vers 90°C pendant 55 min. En fin d'essai, on récupère après refroidissement 620 g d'un sirop à 15,6% de copolymère séquencé. Rapport en poids branches/séquence B du copolymère obtenu : 1,22.

**3^{ème} étape** : préparation d'une série de plaques renforcées à l'impact de 4 mm d'épaisseur à partir du sirop de l'exemple 2. On fabrique des plaques à partir des mélanges qui sont décrits dans le tableau I. Les mélanges sont agités, dégazés sous vide puis versés dans des moules selon une procédure identique à celle décrite à l'exemple 1.

**Tableau I**

| | **plaque 2** | **plaque 3** | **plaque 4** | **plaque 5** | **plaque 6** |
|---|---|---|---|---|---|
| | invention | invention | invention | invention | comparatif |
| **sirop de l'étape 2 [%]** | 99,9 | 89,9 | 69,9 | 49,9 | 0 |
| **AIBN [ppm]** | 900 | 900 | 900 | 900 | 900 |
| γ**-terpinène [ppm]** | 100 | 100 | 100 | 100 | 100 |
| **MAM non stabilisé [%]** | 0 | 10 | 30 | 50 | 100 |

Les moules sont alors introduits en position horizontale dans une étuve à circulation d'air programmable. La polymérisation est effectuée à 70°C pendant 7 heures. On récupère des plaques PMMA facilement démoulables possédant les caractéristiques suivantes :

**Tableau II**

| plaque | **teneur séquence B dans plaque** [%] | **haze [%]** | **Vicat [°C]** | **MAM résiduel [%]** | **résistance à l'impact [kJ/m²]** |
|---|---|---|---|---|---|
| **2** (inv.) | 6,8 | 9,8 | | | 29,5 |
| **3** (inv.) | 6,1 | 3,7 | 110,7 | 1,2 | 31,0 |
| **4** (inv.) | 4,8 | 2,9 | | 1,1 | 41,8 |
| **5** (inv.) | 3,4 | 2,5 | 108,5 | 1 | 41,3 |
| **6** (comp.) | 0 | 1 | 116,0 | < 1 | 12,0 |

On remarque que la résistance à l'impact des plaques ne progresse pas de façon monotone avec la teneur en séquence centrale B dans la plaque. La résistance est maximale pour une teneur en séquence centrale comprise entre 3,4 et 4,8% pour une transparence qui est très bonne (haze de 2,5%). On notera aussi la basse teneur en MAM résiduel.

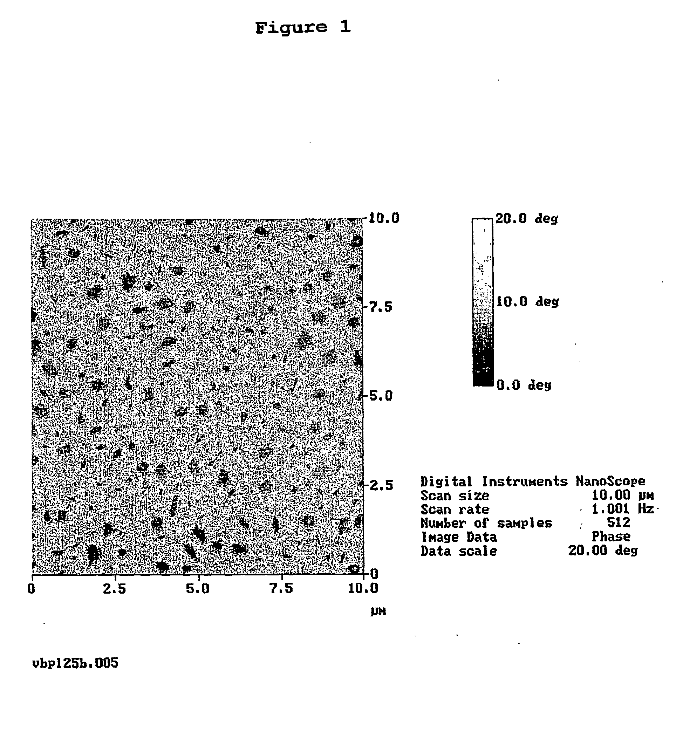

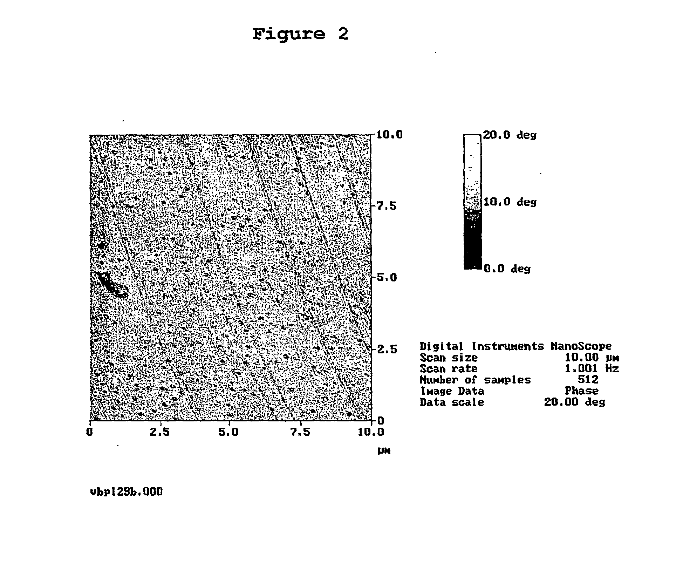

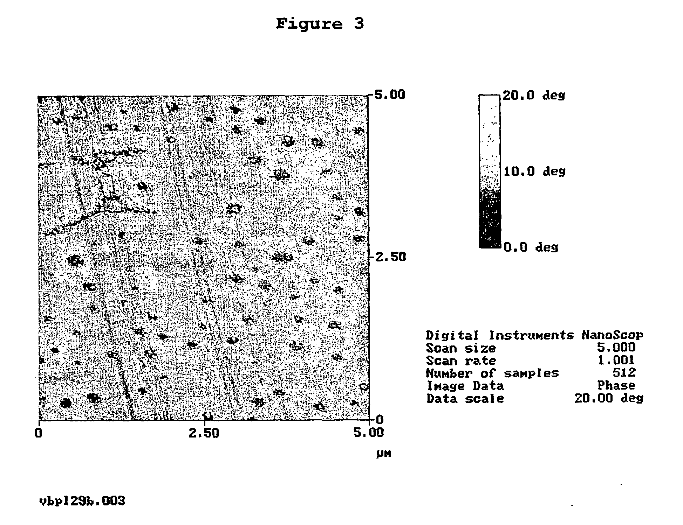

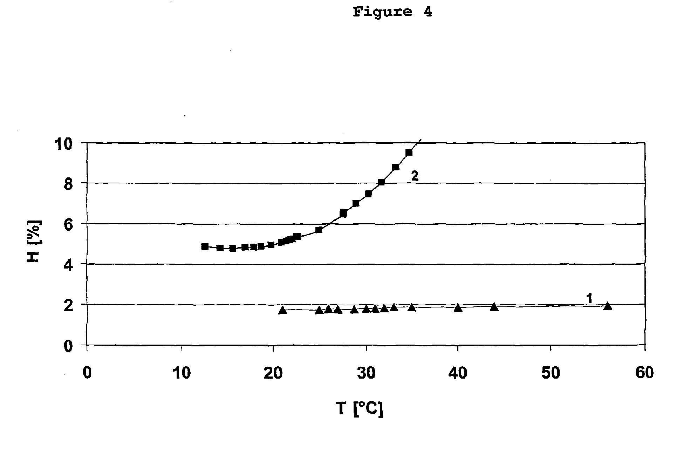

Les plaques 2 et 4 ont été étudiées à l'aide du microscope à force atomique (AFM). La figure 1 représente un cliché AFM de la plaque 2. Les figures 2 et 3 représentent des clichés AFM de la plaque 4. Pour les deux plaques, on note sur les clichés la présence de particules sensiblement sphériques répartis de manière uniforme. Les particules sont des nodules au sein desquels sont présents des sous-nodules. Les particules de la plaque 2 ont une taille de l'ordre de 300-500 nm. Ceux de la plaque 4 ont une taille de l'ordre de 100-200 nm.

### Influence de la température sur la transparence

On a mesuré également la transparence (haze H en %) en fonction de la température T (en °C) pour la plaque coulée 5 (courbe 1) et pour une plaque coulée obtenue à partir d'un modifiant choc commercial, le grade ZK 6BR vendu par ROEHM Gmbh (courbe 2).

On constate que le haze est peu influencé par la température sur la courbe 1 alors que l'influence est beaucoup plus sensible pour la courbe 2.

## Revendications

1. Procédé de préparation de plaques coulées en PMMA renforcées à l'impact comprenant les étapes suivantes :
1. on chauffe un mélange comprenant :
• au moins une alcoxyamine Z(-T)ₙ dans laquelle Z désigne un groupement multivalent, n un entier supérieur à 2, de préférence compris entre 2 et 10, avantageusement entre 2 et 8 et T est un nitroxyde, et
• le(s) monomère(s) destiné(s) à former une séquence centrale B à une température suffisante pour activer l'alcoxyamine et polymériser le(s) monomère(s) ;
2. on réactive la séquence centrale B éventuellement mélangée avec le(s) monomère(s), non consommé(s) de l'étape 1 en présence du(des) monomère(s) destiné(s) à former les branches A ;
3. on ajoute au mélange obtenu à l'étape 2 du MAM et éventuellement au moins un comonomère M copolymérisable par voie radicalaire avec le MAM et au moins un amorceur radicalaire ;
4. le mélange de l'étape 3 est coulé dans un moule, puis chauffé.

2. Procédé selon les revendications 1 dans lequel la séquence centrale B présente une température de transition vitreuse globale inférieure à 0°C.

3. Procédé selon la revendication 1 ou 2 dans lequel la séquence centrale B est préparée à partir d'un mélange comprenant au moins un monomère choisi :
• les monomères acryliques de formule CH₂=CH-C(=O)-O-R₁ où R₁ désigne un atome d'hydrogène, un groupement alkyle en C₁-C₄₀ linéaire, cyclique ou ramifié éventuellement substitué par un atome d'halogène , un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
• les monomères méthacryliques de formule CH₂=C(CH₃)-C(=O)-O-R₂ où R₂ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
• les monomères vinylaromatiques tels que par exemple le styrène, les styrènes substitués, l'alpha-méthylstyrène, le monochlorostyrène, le tertbutyl styrène.

4. Procédé selon l'une des revendications 1 à 3 dans lequel chaque branche A présente une température de transition vitreuse globale supérieure à 0°C.

5. Procédé selon l'une des revendications 1 à 4 dans lequel chaque branche A est préparée à partir d'un mélange comprenant le MAM et éventuellement au moins un monomère choisi parmi :
• les monomères acryliques de formule CH₂=CH-C(=O)-O-R₁ où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle,de glycidyle, les acrylates d'hydroxyalkyle, l'acrylonitrile ;
• les monomères méthacryliques de formule CH₁₂=C(CH₃)-C(=O)-O-R₂ où R₂ désigne un atome d'hydrogène, un groupement alkyle en C₂-C₄₀ linéaire, cyclique ou ramifié éventuellement substitué par un atome d'halogène, un groupement hydroxy, alcoxy-, cyano, amino ou époxy tels que par exemple l'acide méthacrylique, le méthacrylate d'éthyle, de propyle, de n-butyle, d'isobutyle, de tertiobutyle, de 2-éthylhexyle, de glycidyle, les méthacrylates d'hydroxyalkyle, le méthacrylonitrile ;
• les monomères vinylaromatiques tels que par exemple le styrène, les styrènes substitués comme l'alpha-méthylstyrène, le monochlorostyrène, le tertbutyl styrène.

6. Procédé selon l'une quelconque des revendications 1 à 5 dans lequel le groupement Z est choisi parmi les groupements : 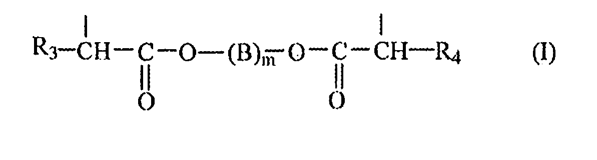 dans laquelle R₃ et R₄; identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10 ; 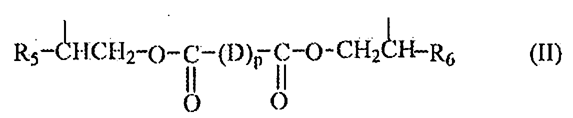 dans laquelle R₅ et R₆, identiques ou différents, représentent des radicaux aryle, pyridyle, furyle, thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxyl ; D représente un radical alkylène, linéaire ou ramifié, ayant un nombre d'atomes de carbone allant de 1 à 6, un radical phénylène, un radical cycloalkylène ; p étant un nombre entier allant de 1 à 10 ; 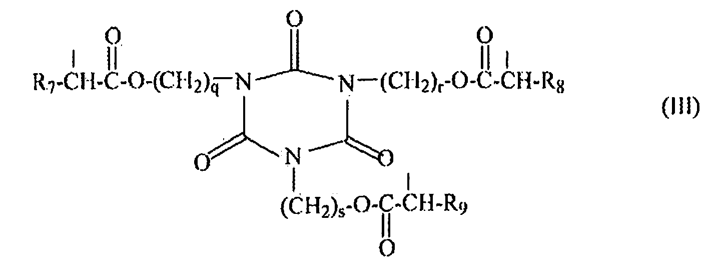 dans laquelle R₇ R₈ et R₉, identiques ou différents, ont les mêmes significations que R₃ et R₄ de la formule (I), q, r et s sont des nombres entiers allant de 1 à 10 ; 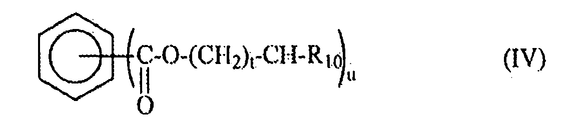 dans laquelle R₁₀ a la même signification que R₅ et R₆ de la formule (II), t est un nombre entier allant de 1 à 4, u est un entier compris entre. 2 et 6 (le groupement aromatique est substitué) ; 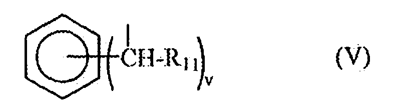 dans laquelle R₁₁ a la même signification que le radical R₁₀ de la formule (IV) et v est un entier compris entre 2 et 6; 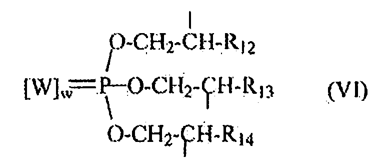 dans laquelle R₁₂, R₁₃ et R₁₄, identiques ou différents, représentent un radical phényle, éventuellement substitué par un atome d'halogène tel que Cl, Br, ou bien par un radical alkyle, linéaire ou ramifié, ayant un nombre d'atomes de carbone allant de 1 à 10 ; W représente un atome d'oxygène, de soufre, de sélénium, w est égal à zéro ou 1 ; 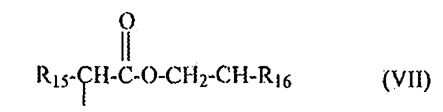 dans laquelle R₁₅ a la même signification que R₃ de la formule (I), R₁₆ a la même signification que R₅ ou R₆ de la formule (II) ; 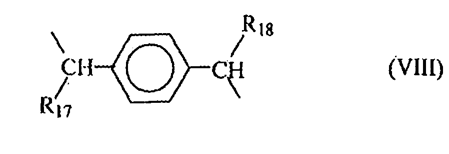 dans laquelle R₁₇ et R₁₈ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome.

7. Procédé selon l'une des revendications 1 à 6 dans lequel le nitroxyde T est représenté par la structure : 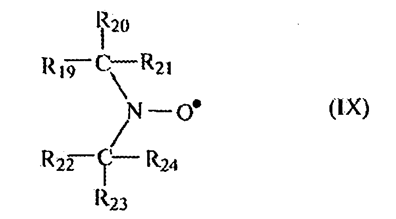 dans laquelle R₁₉, R₂₀, R₂₁, R₂₂, R₂₄ et R₂₄ désignent des groupements :
- alkyles linéaires ou branchés en C₁-C₂₀, de préférence en C₁-C₁₀ tels que méthyle, éthyle, propyle, butyle, isopropyle, isobutyle, tertiobutyle, néopentyle, substitués ou non,
- aryles en C₆-C₃₀ substitués ou non tels que benzyle, aryl (phényl),
- cycliques saturés en C₁-C₃₀, et dans laquelle les groupements R₁₉ et R₂₂ peuvent faire partie d'une structure cyclique R₁₉-CNC-R₂₂ éventuellement substituée pouvant être choisie parmi : 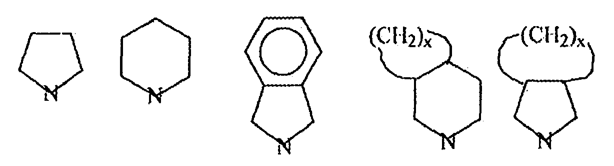
dans lesquelles x désigne un entier compris entre 1 et 12.

8. Procédé selon la revendication 7 dans lequel le nitroxyde T a pour formule : 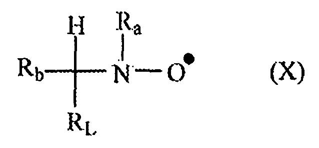 Rₐ et R_{b} désignant des groupements alkyles identiques ou différents possédant de 1 à 40 atomes de carbone, éventuellement reliés entre eux de façon à former un cycle et éventuellement substitués par des groupements hydroxy, alcoxy ou amino et R_{L} désignant un groupement monovalent de masse molaire supérieur à 16 g/mol, de préférence supérieur à 30 g/mol.

9. Procédé selon l'une des revendications 1 à 8 dans lequel le nitroxyde T a pour formule :

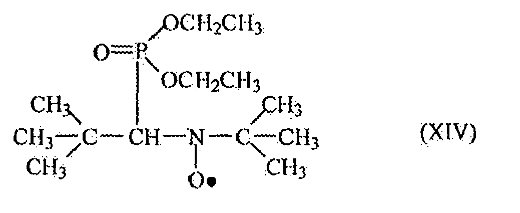

10. Procédé selon l'une quelconque des revendications 1 à 9 dans lequel la proportion de séquence centrale B dans la plaque est comprise en poids entre 2 et 5%, de préférence entre 2,5 et 4,5%, de manière encore plus avantageuse entre 2,6 et 4,0%.

11. Plaque susceptible d'être obtenue selon un procédé tel que défini à l'une quelconque des revendications 1 à 10.

12. Utilisation d'une plaque préparée selon un procédé tel que défini à l'une quelconque des revendications 1 à 10 pour la fabrication de vitres, murs antibruit, écrans plats, panneaux publicitaires ou panneaux d'affichage.

13. Plaque coulée comprenant une matrice d'homo- ou copolymère de MAM dans laquelle sont dispersées de façon homogène des particules de copolymère séquence B (-A)ₙ se présentant sous forme de nodules sensiblement sphériques à l'intérieur desquels sont présents un ou plusieurs sous-nodule (s) ayant la même composition que l'homo- ou copolymère de méthacrylate de méthyle.

14. Plaque selon la revendication 13 dans laquelle la taille des particules est de l'ordre de 100-600 nm, de préférence 100-400 nm, de manière avantageuse 100-250 nm.

## Claims

1. Process for the preparation of impact-strengthened cast PMMA sheets comprising the following stages:
1. a mixture comprising:
• at least one alkoxyamine 2 (-T)ₙ, in which Z denotes a polyvalent group, n denotes an integer greater than 2, preferably of between 2 and 10, advantageously between 2 and 8, and T is a nitroxide, and
• the monomer(s) intended to form a central block B
is heated to a temperature sufficient to activate the alkoxyamine and polymerize the monomer(s);
2. the central block B, optionally mixed with the unconsumed monomer(s) from stage 1, is reactivated in the presence of the monomer(s) intended to form the branches A;
3. MAM and optionally at least one comonomer M which can be copolymerized by the radical route with MMA and at least one radical initiator are added to the mixture obtained in stage 2;
4. the mixture from stage 3 is cast in a mould and then heated.

2. Process according to Claim 1, in which the central block B exhibits an overall glass transition temperature of less than 0°C.

3. Process according to Claim 1 or 2, in which the central block B is prepared from a mixture comprising at least one monomer chosen from:
• acrylic monomers of formula CH₂=CH-C(=O)-O-R1 where R₁ denotes a hydrogen atom or a linear, cyclic or branched C₁-C₄₀ alkyl group optionally substituted by a halogen atom or a hydroxyl, alkoxy, cyano, amino or epoxy group, such as, for example, acrylic acid, methyl, ethyl, propyl, n-butyl, isobutyl, tert-butyl, 2-ethylhexyl or glycidyl acrylate, hydroxyalkyl acrylates or acrylonitrile;
• methacrylic monomers of formula CH₂=C(CH₃)-C(=O)-O-R₂ where R₂ denotes a hydrogen atom or a linear, cyclic or branched C₁-C₄₀ alkyl group optionally substituted by a halogen atom or a hydroxyl, alkoxy, cyano, amino or epoxy group, such as, for example, methacrylic acid, methyl, ethyl, propyl, n-butyl, isobutyl, tert-butyl, 2-ethylhexyl or glycidyl methacrylate, hydroxyalkyl methacrylates or methacrylonitrile;
• vinylaromatic monomers, such as, for example, styrene, substituted styrenes, α-methylstyrene, monochlorostyrene or tert-butylstyrene.

4. Process according to one of Claims 1 to 3, in which each branch A exhibits an overall glass transition temperature of greater than 0°C.

5. Process according to one of Claims 1 to 4, in which each branch A is prepared from a mixture comprising MMA and optionally at least one monomer chosen from:
• acrylic monomers of formula CH₂=CH-C(=O)-O-R₁ where R₁ denotes a hydrogen atom or a linear, cyclic or branched C₁-C₄₀ alkyl group optionally substituted by a halogen atom or a hydroxyl, alkoxy, cyano, amino or epoxy group, such as, for example, acrylic acid, methyl, ethyl, propyl, n-butyl, isobutyl, tert-butyl, 2-ethylhexyl or glycidyl acrylate, hydroxyalkyl acrylates or acrylonitrile;
• methacrylic monomers of formula CH₂=C(CH₃)-C(=O)-O-R₂ where R₂ denotes a hydrogen atom or a linear, cyclic or branched C₂-C₄₀ alkyl group optionally substituted by a halogen atom or a hydroxyl, alkoxy, cyano, amino or epoxy group, such as, for example, methacrylic acid, ethyl, propyl, n-butyl, isobutyl, tert-butyl, 2-ethylhexyl or glycidyl methacrylate, hydroxyalkyl methacrylates or methacrylonitrile;
• vinylaromatic monomers, such as, for example, styrene or substituted styrenes, such as α-methylstyrene, monochlorostyrene or tert-butylstyrene.

6. Process according to any one of Claims 1 to 5, in which the group Z is chosen from the groups: 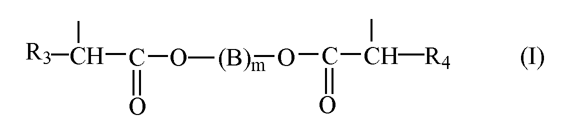 in which R₃ and R₄, which are identical or different, represent a linear or branched alkyl radical having a number of carbon atoms ranging from 1 to 10, phenyl or thienyl radicals optionally substituted by a halogen atom, such as F, Cl or Br, or else by a linear or branched alkyl radical having a number of carbon atoms ranging from 1 to 4 or else by nitro, alkoxy, aryloxy, carbonyl or carboxyl radicals; a benzyl radical, a cycloalkyl radical having a number of carbon atoms ranging from 3 to 12, a radical comprising one or more unsaturations; B represents a linear or branched alkylene radical having a number of carbon atoms ranging from 1 to 20; m is an integer ranging from 1 to 10; 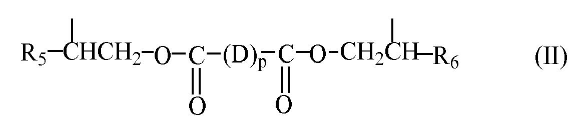 in which R₅ and R₆, which are identical or different, represent aryl, pyridyl, furyl or thienyl radicals optionally substituted by a halogen atom, such as F, Cl or Br, or else by a linear or branched alkyl radical having a number of carbon atoms ranging from 1 to 4 or else by nitro, alkoxy, aryloxy, carbonyl or carboxyl radicals; D represents a linear or branched alkylene radical having a number of carbon atoms ranging from 1 to 6, a phenylene radical, a cycloalkylene radical; p being an integer ranging from 1 to 10; 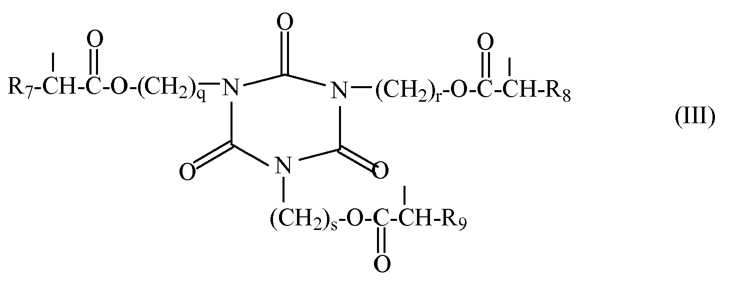 in which R₇, R₈ and R₉, which are identical or different, have the same meanings as R₃ and R₄ of the formula (I) and q, r and s are integers ranging from 1 to 10; 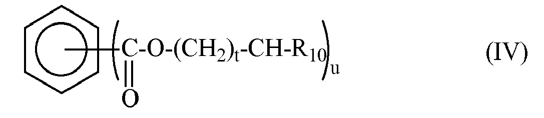 in which R₁₀ has the same meaning as R₅ and R₆ of the formula (II), t is an integer ranging from 1 to 4 and u is an integer of between 2 and 6 (the aromatic group is substituted); 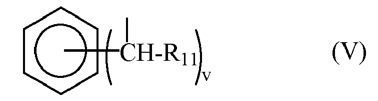 in which R₁₁ has the same meaning as the R₁₀ radical of the formula (IV) and v is an integer between 2 and 6; 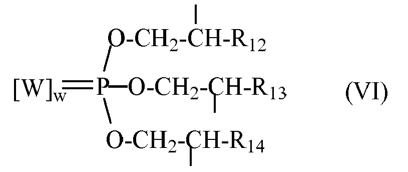 in which R₁₂, R₁₃ and R₁₄, which are identical or different, represent a phenyl radical optionally substituted by a halogen atom, such as Cl or Br, or else by a linear or branched alkyl radical having a number of carbon atoms ranging from 1 to 10, W represents an oxygen, sulphur or selenium atom and w is equal to zero or 1; 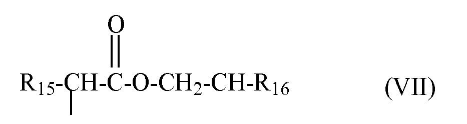 in which R₁₅ has the same meaning as R₃ of the formula (I) and R₁₆ has the same meaning as R₅ or R₆ of the formula (II); 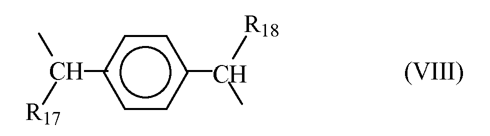 in which R₁₇ and R₁₈, which are identical or different, represent a hydrogen atom, a linear or branched alkyl radical having a number of carbon atoms ranging from 1 to 10, an aryl radical, optionally substituted by a halogen atom or a heteroatom.

7. Process according to one of Claims 1 to 6, in which the nitroxide T is represented by the structure: 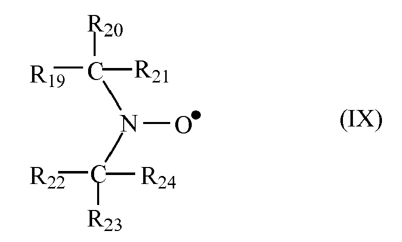 in which R₁₉, R₂₀, R₂₁, R₂₂, R₂₃ and R₂₄ denote:
- linear or branched C₁-C₂₀, preferably C₁-C₁₀, alkyl groups, such as methyl, ethyl, propyl, butyl, isopropyl, isobutyl, tert-butyl or neopentyl, which may or may not be substituted,
- substituted or unsubstituted C₆-C₃₀ aryl groups, such as benzyl, aryl(phenyl),
- saturated C₁-C₃₀ cyclic groups, and in which the R₁₉ and R₂₂ groups can form part of an optionally substituted cyclic structure R₁₉-CNC-R₂₂ which can be chosen from: 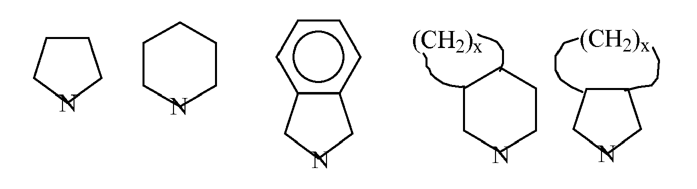
in which x denotes an integer between 1 and 12.

8. Process according to Claim 7, in which the nitroxide T has the formula 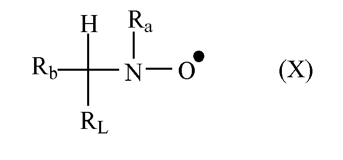 Rₐ and R_{b} denoting identical or different alkyl groups having from 1 to 40 carbon atoms which are optionally connected to one another so as to form a ring and which are optionally substituted by hydroxyl, alkoxy or amino groups and R_{L} denoting a monovalent group with a molar mass of greater than 16 g/mol, preferably of greater than 30 g/mol.

9. Process according to one of Claims 1 to 8, in which the nitroxide T has the formula:

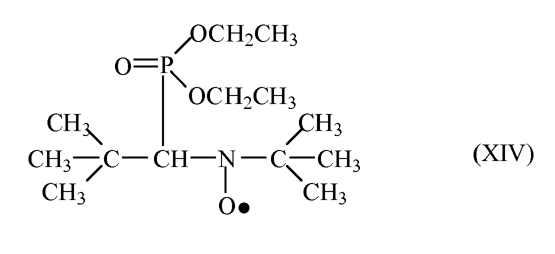

10. Process according to any one of Claims 1 to 9, in which the proportion of central block B in the sheet is by weight between 2 and 5%, preferably between 2.5 and 4.5%, more advantageously still between 2.6 and 4.0%.

11. Sheet capable of being obtained according to a process as defined in any one of Claims 1 to 10.

12. Use of a sheet prepared according to a process as defined in any one of Claims 1 to 10 in the manufacture of window panes, soundproof walls, flat screens, billboards or display devices.

13. Cast sheet comprising a matrix of MMA homo- or copolymer in which particles of block copolymer B(-A)ₙ, existing in the form of substantially spherical nodules inside of which one or more subnodule(s) having the same composition as the methyl methacrylate homo- or copolymer are present, are homogeneously dispersed.

14. Sheet according to Claim 13, in which the size of the particles is of the order of 100-600 nm, preferably 100-400 nm, advantageously 100-250 nm.

## Patentansprüche

1. Verfahren zur Herstellung von schlagzäh ausgerüsteten gegossenen PMMA-Platten, bei dem man:
1. ein Gemisch, enthaltend:
• mindestens ein Alkoxyamin 2(-T)ₙ, worin Z für eine mehrwertige Gruppe steht und n für eine ganze Zahl größer 2, vorzugsweise zwischen 2 und 10 und vorteilhafterweise zwischen 2 und 8 steht und T für ein Nitroxid steht, und
• das Monomer bzw. die Monomere, das bzw. die zur Bildung einer zentralen Sequenz B bestimmt sind, auf eine zur Aktivierung des Alkoxyamins und zur Polymerisation des Monomers bzw. der Monomere ausreichende Temperatur erhitzt;
2. die zentrale Sequenz B, gegebenenfalls im Gemisch mit dem nicht umgesetzten Monomer bzw. den nicht umgesetzten Monomeren aus Schritt 1 in Gegenwart des Monomers bzw. der Monomere, die zur Bildung der Verzweigungen A bestimmt sind, reaktiviert;
3. das in Schritt 2 erhaltene Gemisch mit MMA und gegebenenfalls mindestens einem Copolymer M, das mit MMA radikalisch copolymerisierbar ist, und mindestens einem radikalischen Initiator versetzt;
4. das Gemisch aus Schritt 3 in eine Form gießt und dann erhitzt.

2. Verfahren nach Anspruch 1, bei dem der zentrale Block B eine Gesamt-Glasübergangstemperatur von weniger als 0°C aufweist.

3. Verfahren nach Anspruch 1 oder 2, bei dem die zentrale Sequenz B aus einem Gemisch hergestellt wird, das mindestens ein unter:
• Acrylmonomeren der Formel CH₂=CH-C(=O)-O-R₁, wobei R₁ für ein Wasserstoffatom oder eine lineare, cyclische oder verzweigte C₁-C₄₀-Alkylgruppe, die gegebenenfalls durch ein Halogenatom oder eine Hydroxy-, Alkoxy-, Cyano-, Amino- oder Epoxidgruppe, substituiert ist, wie beispielsweise Acrylsäure, Methyl-, Ethyl-, Propyl-, n-Butyl-, Isobutyl-, tert.-Butyl-, 2-Ethylhexyl- oder Glycidylacrylat, Hydroxyalkylacrylate oder Acrylnitril;
• Methacrylmonomeren der Formel CH₂=C (CH₃) -C (=O) - O-R₂, wobei R₂ für ein Wasserstoffatom oder eine lineare, cyclische oder verzweigte C₁-C₄₀-Alkylgruppe, die gegebenenfalls durch ein Halogenatom oder eine Hydroxy-, Alkoxy-, Cyano-, Amino- oder Epoxidgruppe, substituiert ist, wie beispielsweise Methacrylsäure, Methyl- , Ethyl-, Propyl-, n-Butyl-, Isobutyl-, tert.-Butyl-, 2-Ethylhexyl- oder Glycidylmethacrylat, Hydroxyalkylmethacrylate oder Methacrylnitril;
• vinylaromatischen Monomeren, wie beispielsweise Styrol, substituierte Styrole, α-Methylstyrol, Monochlorstyrol oder tert.-Butylstyrol; ausgewähltes Monomer enthält.

4. Verfahren nach einem der Ansprüche 1 bis 3, bei dem jede Verzweigung A eine Gesamt-Glasübergangstemperatur von mehr als 0°C aufweist.

5. Verfahren nach einem der Ansprüche 1 bis 4, bei dem jede Verzweigung A aus einem Gemisch hergestellt wird, das MMA und gegebenenfalls mindestens ein unter:
• Acrylmonomeren der Formel CH₂=CH-C(=O)-O-R₁, wobei R₁ für ein Wasserstoffatom oder eine lineare, cyclische oder verzweigte C₁-C₄₀-Alkylgruppe, die gegebenenfalls durch ein Halogenatom oder eine Hydroxy-, Alkoxy-, Cyano-, Amino- oder Epoxidgruppe, substituiert ist, wie beispielsweise Acrylsäure, Methyl-, Ethyl-, Propyl-, n-Butyl-, Isobutyl-, tert.-Butyl-, 2-Ethylhexyl- oder Glycidylacrylat, Hydroxyalkylacrylate oder Acrylnitril;
• Methacrylmonomeren der Formel CH₂=C (CH₃) -C (=O) - O-R₂, wobei R₂ für ein Wasserstoffatom oder eine lineare, cyclische oder verzweigte C₂-C₄₀-Alkylgruppe, die gegebenenfalls durch ein Halogenatom oder eine Hydroxy-, Alkoxy-, Cyano-, Amino- oder Epoxidgruppe, substituiert ist, wie beispielsweise Methacrylsäure, Ethyl-, Propyl-, n-Butyl-, Isobutyl-, tert.-Butyl-, 2-Ethylhexyl- oder Glycidylmethacrylat, Hydroxyalkylmethacrylate oder Methacrylnitril;
• vinylaromatischen Monomeren, wie beispielsweise Styrol, substituierte Styrole, α-Methylstyrol, Monochlorstyrol oder tert.-Butylstyrol; ausgewähltes Monomer enthält.

6. Verfahren nach einem der Ansprüche 1 bis 5, bei dem die Gruppe Z unter den Gruppen: 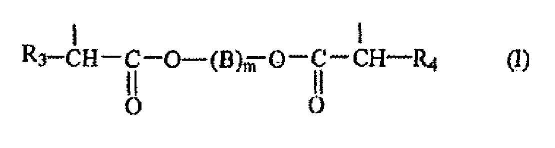 worin R₃ und R₄ gleich oder verschieden sind und für einen linearen oder verzweigten Alkylrest mit 1 bis 10 Kohlenstoffatomen, Phenyl- oder Thienylreste, die gegebenenfalls durch ein Halogenatom wie F, Cl oder Br oder auch durch einen linearen oder verzweigten Alkylrest mit 1 bis 4 Kohlenstoffatomen oder auch durch Nitro-, Alkoxy-, Aryloxy-, Carbonyl- oder Carboxyreste substituiert sind; einen Benzylrest, einen Cycloalkylrest mit 3 bis 12 Kohlenstoffatomen oder einen Rest mit einer oder mehreren Ungesättigtheiten stehen; B für einen linearen oder verzweigten Alkylrest mit 1 bis 20 Kohlenstoffatomen steht und m für eine ganze Zahl von 1 bis 10 steht; 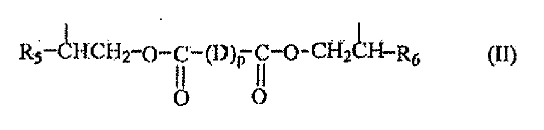 worin R₅ und R₆ gleich oder verschieden sind und für Aryl-, Pyridyl-, Furyl- oder Thienylreste, die gegebenenfalls durch ein Halogenatom wie F, Cl oder Br oder auch durch einen linearen oder verzweigten Alkylrest mit 1 bis 4 Kohlenstoffatomen oder auch durch Nitro-, Alkoxy-, Aryloxy-, Carbonyl- oder Carboxyreste substituiert sind, stehen; D für einen linearen oder verzweigten Alkylenrest mit 1 bis 6 Kohlenstoffatomen, einen Phenylenrest oder einen Cycloalkylenrest steht und p für eine ganze Zahl von 1 bis 10 steht; 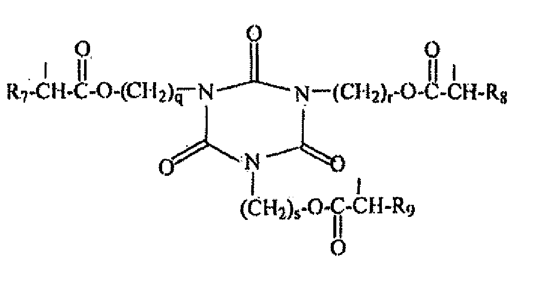 worin R₇, R₈ und R₉ gleich oder verschieden sind und die gleichen Bedeutungen wie R₃ und R₄ von Formel (I) besitzen und q, r und s für ganze Zahlen von 1 bis 10 stehen; 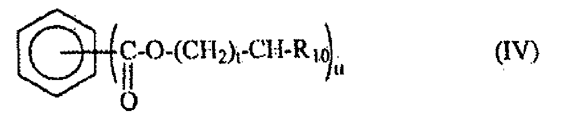 worin R₁₀ die gleiche Bedeutung wie R₅ und R₆ von Formel (II) besitzt, t für eine ganze Zahl von 1 bis 4 steht und u für eine ganze Zahl zwischen 2 und 6 steht (die aromatische Gruppe ist substituiert) ; 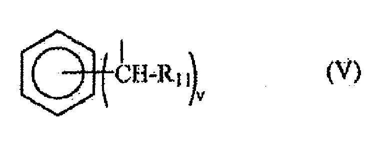 worin R₁₁ die gleiche Bedeutung wie der Rest R₁₀ von Formel (IV) besitzt und v für eine ganze Zahl zwischen 2 und 6 steht; 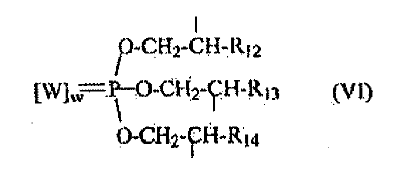 worin R₁₂, R₁₃ und R₁₄ gleich oder verschieden sind und für einen Phenylrest, der gegebenenfalls durch ein Halogenatom wie Cl oder Br oder auch durch einen linearen oder verzweigten Alkylrest mit 1 bis 10 Kohlenstoffatomen substituiert ist, stehen; W für ein Sauerstoff-, Schwefel- oder Selenatom steht und w gleich 0 oder 1 ist; 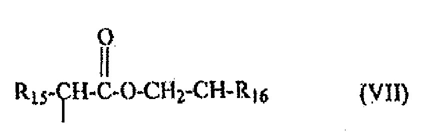 worin R₁₅ die gleiche Bedeutung wie R₃ von Formel (I) besitzt und R₁₆ die gleiche Bedeutung wie R₅ oder R₆ von Formel (II) besitzt; 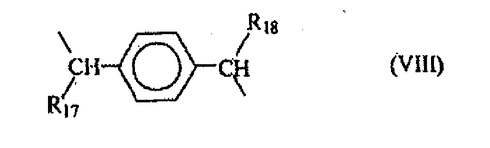 worin R₁₇ und R₁₈ gleich oder verschieden sind und für ein Wasserstoffatom, einen linearen oder verzweigten Alkylrest mit 1 bis 10 Kohlenstoffatomen oder einen Arylrest, der gegebenenfalls durch ein Halogenatom oder ein Heteroatom substituiert ist, stehen; ausgewählt wird.

7. Verfahren nach einem der Ansprüche 1 bis 6, bei dem das Nitroxid T durch die folgende Formel wiedergegeben wird: 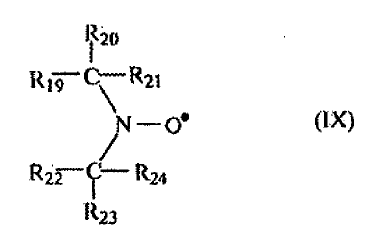 worin R₁₉, R₂₀, R₂₁, R₂₂, R₂₃ und R₂₄ für:
- lineare oder verzweigte C₁-C₂₀-Alkylgruppen, vorzugsweise C₁-C₁₀-Alkylgruppen, wie Methyl, Ethyl, Propyl, Butyl, Isopropyl, Isobutyl, tert.-Butyl oder Neopentyl, die gegebenenfalls substituiert sind,
- gegebenenfalls substituierte C₆-C₃₀-Arylgruppen wie Benzyl oder Aryl (Phenyl),
- gesättigte cyclische C₃-C₃₀-Gruppen stehen und die Gruppen R₁₉ und R₂₂ Teil einer gegebenenfalls substituierten cyclischen Struktur R₁₉-CNC-R₂₂, die unter: 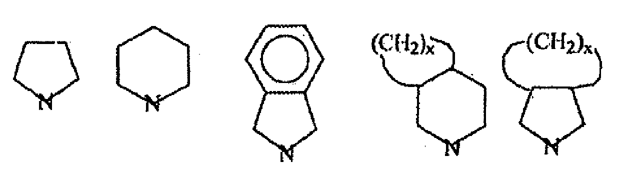
worin x für eine ganze Zahl zwischen 1 und 12 steht, ausgewählt ist, sein können.

8. Verfahren nach Anspruch 7, bei dem das Nitroxid T die folgende Formel aufweist: 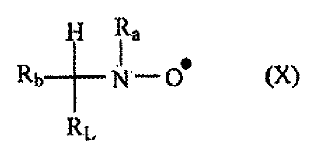 wobei Rₐ und R_{b} für gleiche oder verschiedene Alkylgruppen mit 1 bis 40 Kohlenstoffatomen, die gegebenenfalls miteinander zu einem Ring verbunden sind und gegebenenfalls durch Hydroxy-, Alkoxy- oder Aminogruppen substituiert sind, stehen und R_{L} für eine einwertige Gruppe mit einer Molmasse von mehr als 16 g/mol und vorzugsweise mehr als 30 g/mol steht.

9. Verfahren nach einem der Ansprüche 1 bis 8, bei dem das Nitroxid T die folgende Formel aufweist:

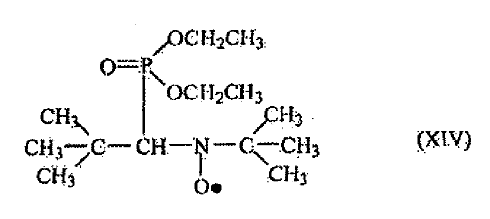

10. Verfahren nach einem der Ansprüche 1 bis 9, bei dem der Anteil der zentralen Sequenz B in der Platte zwischen 2 und 5 Gew.-%, vorzugsweise zwischen 2,5 und 4,5 Gew.-% und noch vorteilhafter zwischen 2,6 und 4,0 Gew.-% liegt.

11. Platte, die nach einem Verfahren gemäß einem der Ansprüche 1 bis 10 erhältlich ist.

12. Verwendung einer nach einem Verfahren gemäß einem der Ansprüche 1 bis 10 hergestellten Platte zur Herstellung von Fensterscheiben, Lärmschutzwänden, Flachbildschirmen, Reklametafeln oder Anzeigetafeln.

13. Gegossene Platte, umfassend eine MMA-Homopolymer- oder MMA-Copolymer-Matrix, in der Teilchen aus B(-A)ₙ-Blockcopolymer, die in Form von weitgehend sphärischen Körnchen vorliegen, in deren Inneren ein oder mehrere Subkörnchen mit der gleichen Zusammensetzung wie das Methylmethacrylat-Homopolymer oder -Copolymer vorliegen, homogen dispergiert sind.

14. Platte nach Anspruch 13, in der die Größe der Teilchen etwa 100-600 nm, vorzugsweise 100-400 nm und vorteilhafterweise 100-250 nm beträgt.
